# EUROPEAN PATENT SPECIFICATION

(11) **EP 4 117 422 B1**
(45) Date of publication and mention of the grant of the patent: **18.02.2026**
(21) Application number: 21717208.9
(22) Date of filing: 09.03.2021
(51) Int. Cl.: A01D 46/28, A01M 7/00, A01G 17/02

(54) **AUTOMATED FARMING SYSTEM FOR A ROW CROP INSTALLATION**
AUTOMATISIERTES LANDWIRTSCHAFTLICHES SYSTEM FÜR REIHENKULTIVIERUNG VON NUTZPFLANZEN
SYSTÈME AGRICOLE AUTOMATIQUE POUR UNE INSTALLATION DE CULTURE EN RANGÉES

(30) Priority: 10.03.2020 IT 202000005089
(43) Date of publication of application: 18.01.2023
(73) Proprietor: Alma Mater Studiorum Universita di Bologna, 40126 Bologna (IT)
(72) Inventor: ROSSI, Claudio, 40121 Bologna (IT); CORELLI GRAPPADELLI, Luca, 48022 Lugo (Ravenna) (IT)
(74) Representative: Conti, Marco
(86) International application number: PCT/IB2021/051940
(87) International publication number: WO 2021/181260

(56) References cited:
- EP-A1- 0 940 313
- WO-A1-02/098207
- CN-A- 106 069 569
- GB-A- 475 074
- JP-A- 2000 108 894
- KR-A- 20180 066 526
- US-A1- 2012 291 345

## Description

### Technical field

This invention relates to a system and method for farming fruit and vegetable row crops (row crop installations).

### Background art

In farming systems for row crop installations, the plants grow in a substantially vertical plane which passes through a longitudinal axis along which a respective row of the crop installation extends.

In the context of farming in these installations, it is increasingly important to increase yields by speeding up and streamlining the correlated farming activities. Farming sustainability is another increasing need.

Known in the prior art in this context, are farming installations, for example, row crop installations but not only these, where row spacing needs to be wide enough to allow agricultural machines to move between them, although this means the crop yield per hectare is reduced. These installations are highly intensive, with high use of water, fertilizer and chemical resources, where the efficiency of these production factors needs to be maximized.

In the sector of industrial or automated farming, solutions are known in which remote-controlled robots are used to perform specific operations on the plants. Solutions of this kind are, however, disadvantageous in that the robots moving on the field have the effect of deteriorating and compacting the soil. Such compaction can be harmful because it stunts the growth of the mixed vegetation cover between rows which would help to control the proliferation of insect pests harmful to the crop plants.

In other solutions, such as those described, for example, in documents CN108116424, CN106364495, CN106303471, CN203651758, CN203651757 and CN202337260, a trolley runs on a mono rail to perform, in each of the solutions described in these documents, a specific operation on the crop installation. The monorail is, however, supported on posts positioned between two rows. In this case, too, therefore, although direct contact with the soil is avoided, the presence of the rail prevents the passage of other machinery between the rows, making the crop inaccessible to other agricultural systems, should these be necessary.

In other solutions, described in documents CN101720601B and CN102730007, for example, the trolley is driven by a wire rope and runs on one or more rails. This solution, however, is complex, relatively ineffective and, in any case, intended for transportation to and from the crop installation rather than for performing cultivating operations.

Other solutions involve using trolleys which are all provided with rolling elements in direct contact with the ground, as described, for example, in document US3610452. In such solutions, preventing harm to the soil is a problem that remains. Moreover, the solutions dependent on movement on the soil are strongly influenced by weather conditions which can make an installation inaccessible for many days at a time.

In addition, other solutions are also known, such as those described in documents US2012291345A1, CN106069569A and GB475074A. In particular, document US2012291345A1 describes the presence of two rows supported by respective poles, a first cable and a second displacement cable, on which a wagon is mobile, moving between the two rows. This solution is very light and not very strong. Document CN106069569A describes a structure for growing grapes, in which there is a series of poles. Said poles do not support the rows of grapes which are not shown in the document. The document shows said poles, to which are mounted a first and second rail, on which a carriage moves. The rails are at ground level. This results in dirt on the ground being deposited on the rails or the cart, compromising operations. Other documents illustrating solutions from the same technical area are KR20180066526, EP0940313A1, WO 02/098207 A1 and JP2000108894A. Disclosure of the invention

This invention has for an aim to provide a farming system and a farming method to overcome the above mentioned disadvantages of the prior art. This aim is fully achieved by the farming system and the farming method of this disclosure as characterized in the appended claims.

According to an aspect of it, this disclosure provides a farming system for fruit and vegetable row crop installations. In other words, it is a row crop farming system.

The system comprises a first plurality of plants. The first plurality of plants is disposed along a first longitudinal axis. The system comprises a second plurality of plants. The second plurality of plants is disposed along a second longitudinal axis. The first plurality of plants and the second plurality of plants are mutually spaced along a transverse direction, perpendicular to the first longitudinal axis and to the direction of the weight force, to form a first row and a second row, respectively. The plants of the first and the second row extend in two dimensions in a corresponding vertical plane passing through the respective longitudinal axis.

The system comprises a supporting structure. The supporting structure is configured to support the plants. For the first row, the supporting structure includes a first plurality of posts. For the second row, the supporting structure includes a second plurality of posts. The posts of the first plurality of posts and/or of the second plurality of posts are disposed along the first and the second longitudinal axis, respectively. The posts of the first plurality of posts and/or of the second plurality of posts are spaced from each other along the first and the second longitudinal axis, respectively. The system comprises a first rail. The first rail is connected to the first plurality of posts. In an embodiment, the system comprises a second rail. The second rail is connected to the second plurality of posts. The first and/or the second rail are oriented longitudinally. The first and/or the second rail are spaced from each other transversely to define a track.

In a particularly advantageous embodiment, the track is spaced from the ground.

In particular, in an example embodiment, said poles of said first and second plurality of posts each extend along a respective axis between a first end, fixed to the ground, and a second end, opposite said first end. According to an example embodiment, the track is disposed, along the axis of each post of said first and second plurality, at a position intermediate between said first and second ends (and/or spaced at least from said first end of the poles), so as to be raised relative to the ground in which said first ends of the posts are fixed.

In an example embodiment, the first rail and the second rail comprise a support surface, on which a carriage rests that slides on the first and second rails. Said support surface preferably has a planar development. In an example embodiment, the first guide and the second guide are defined by rigid elements. In an example embodiment, the first and second guides are laterally connected to respective first and second plurality of posts, in particular on sides of the first and second plurality of posts facing each other. For example, the rails are attached to the posts by means of arms or other connectors that are cantilevered so as to project relative to the posts toward the aisle bounded by the opposing rows of posts.

The track is preferably parallel to a profile defined by the ground.

The system comprises a trolley. The trolley is coupled to the first and the second rail. Thus, the trolley is movable along the track.

In an embodiment, the trolley includes a movement actuator. The movement actuator is configured to move the trolley on the track.

The fact that the track is raised off the ground and the fact that the first and the second rail are connected to the plurality of posts allows keeping the soil intact during farming operations, while maintaining accessibility on foot or with small machines or implements. The system also allows access to the installation by operators on board the trolley.

More specifically, thanks to one or more of the features outlined above, the platform can move over the ground, however wet the soil, for example, during falls of rains for monitoring purposes or immediately after to carry out fungicide treatments. This would allow the plants to be treated within minutes of the end of an infected rain without having to wait (normally at least 24-36 hours) for the soil to dry enough to allow a tractor-mounted sprayer to move over it. The fact that action can be taken promptly also means considerably reducing the concentrations of fungicide used and hence released into the environment.

As a further advantage, the total absence of soil compacting actions for the entire duration of the annual farming cycle constitutes an important improvement in cultivation methods because it allows a cover of mixed live vegetation to grow to a considerable height between the first row and the second row. This cover of mixed live vegetation creates a natural habitat for useful insects which prey on harmful insects, thus increasing sustainability because, the quantity of pesticides used by the installation will be much lower than the average required in a standard orchard. Furthermore, leaving the soil undisturbed and uncompacted enhances its edaphic and nutritive properties, increasing its organic content, which is reflected in well-known benefits such as a reduced requirement of fertilizers, in particular nitrogenous fertilizers, and improved water retention properties of the soil.

According to a second aspect of the invention, the trolley comprises one or more operational devices. The one or more operational devices are configured to perform work on the plants. The one or more operational devices are configured to capture information relating to the plants.

The one or more operational devices may be mechanical, electrical, pneumatic or hydraulic tools. The one or more operational devices may be optical devices or sensors in general.

The one or more operational devices may be work positions to accommodate personnel working by hand on the field. The one or more operational devices may be devices working in conjunction with ground personnel in the immediate vicinity of the trolley.

The trolley comprises a frame. The frame includes a first wall. The frame includes a second wall. The first wall defines a first working surface, facing the soil. The second wall defines a second working surface, facing a direction opposite to the first working surface.

The first and the second wall are movable relative to each other. The first wall is parallel to the rails.

The system comprises an adjustment system. The adjustment system is interposed between the first wall and the second wall. The adjustment system is configured to adjust the inclination of the second wall. The adjustment system is configured to adjust the inclination of the second wall to keep it preferably perpendicular to the direction of the weight force. That way, the first and the second working surface can operate in the most convenient manner: that is to say, the first working surface, parallel to the ground, and the second working surface perpendicular to the direction of the weight force, that is, perpendicular to the direction of extension of the plant (e.g. the trunk of a tree).

The one or more operational devices include a first device and a second device. The first device is connected to the first working surface. The first device is configured to perform work on the soil and/or to capture information relating to the soil. The second device is connected to the second working surface. The second device is configured to perform work on the plants and/or to capture information relating to the plants. That way, work on the soil and on the tree can be carried out in parallel, thereby increasing the speed of operations.

In an embodiment, the system comprises a change station. The change station is configured to allow the one or more operational devices (the first device or the second device) to be changed automatically and/or manually. This allows speeding up maintenance and tool changing operations so that work on the installation can be carried out more quickly. In an embodiment, the trolley comprises a plurality of rolling elements which allow the trolley to move along the rail.

Each rolling element is in contact with the track.

In an embodiment, the trolley comprises a plurality of elastic elements, each elastic element being associated with a respective rolling element. It is understood, however, that rolling elements without corresponding elastic elements may be present.

. The plurality of rolling elements comprises a group of transverse rolling elements. Each transverse rolling element is oriented in such a way as to rotate (it is operatively rotatable) about a respective axis of rotation which is parallel to the vertical plane defined by the corresponding row.

The plurality of rolling elements comprises a group of longitudinal rolling elements. Each longitudinal rolling element is oriented in such a way as to rotate (it is operatively rotatable) about a respective transverse axis of rotation which is parallel to the transverse direction.

In an embodiment, the plurality of elastic elements are preloaded.

In an embodiment, each elastic element of the plurality of elastic elements is configured to apply a contact force between the respective rolling elements and the track.

In an embodiment, each rolling element of the group of transverse rolling elements is connected to a respective elastic element of the plurality. In effect, to balance the momentum generated by the weight force of the trolley, the transverse rolling elements must be in contact with the rail at all times.

In an embodiment, at least one rolling element of the group of longitudinal rolling elements is connected to a respective elastic element of the plurality.

More specifically, in an embodiment, a first longitudinal rolling element is a driving rolling element, preferably connected rigidly to the trolley and in contact with the respective rail. A second rolling element, on the other hand, is connected to a respective elastic element of the plurality and rotates idly.

The presence of elastic elements on the longitudinal rolling elements allows compensating for possible misalignment between the first rail and the second rail along the vertical direction due to potential soil surface irregularities, for example.

In an embodiment, the trolley comprises a control unit. The control unit includes one or more modules. More specifically, the control unit includes one or more of the following modules:
- a locating module, configured to determine a position of the trolley on the track relative to the installation;
- a safety module, configured to detect obstacles encountered as the trolley moves along the track;
- a communication module, configured to send the data captured, representing information regarding the plants. Through the communication module it is also possible to send data regarding the state of the soil: for example, the grass covering, microclimate data, the state of the infrastructure, the state of all the technological parts of the trolley, the conditions of the energy system (battery) and/or context images/videos.

In an embodiment, the communication module exchanges data with fixed farming devices such as, for example, soil sensors and plant sensors, irrigation and spraying systems and position markers, to allow all the farming devices present to cooperate with each other.

In an embodiment, the system comprises a control terminal, preferably remote. The control terminal is connected to the control unit of the trolley. The control terminal is configured to send drive signals to the control unit of the trolley to instruct it to move the trolley along a predetermined path. The remote terminal comprises a user interface, configured to allow a user to enter path information and/or operational information, as a function of which the control terminal is configured to generate the drive signals.

In other words, a user sets the path and the operations of the trolley through the remote terminal and the terminal sends the drive signals to the trolley, which is then able to proceed automatically along the path and to perform the functions it was programmed for.

In an embodiment, the control unit of the trolley is configured for:
- capturing the context data;
- saving the captured data to a memory;
- processing the captured data to generate predictive models and to save the predictive models to the memory;
- generating control signals as a function of the captured data and of the predictive models generated;
- sending the control signals to the movement actuator and/or to the one or more operational devices;
- manually controlling the movement actuator and the operational devices of the trolley by a local operator.

In an embodiment, the remote control terminal is configured for:
- receiving the captured data from the control unit of the trolley;
- saving the captured data to a remote memory;
- processing the captured data to generate predictive models and to save the predictive models to the remote memory;
- generating the drive signals as a function of the captured data and of the predictive models generated;
- sending the drive signals to the control unit of the trolley;
- manually controlling the movement actuator and the operational devices of the trolley by a remote operator.

In an embodiment, the movement actuator is an electric actuator. In an embodiment, the trolley comprises an electrical energy accumulator. The energy accumulator is connected to the movement actuator to power the actuator. In an embodiment, the system comprises a charging station. The charging station is connected to the track. The charging station comprises an electrical interface. The electrical interface is connectable to the energy accumulator to allow charging it with electrical energy.

In an embodiment, the supporting structure includes a plurality of connectors, including a first set of connectors, configured to connect the first guide to the first plurality of posts, and a second set of connectors, configured to connect the second guide to the second plurality of posts. Thus, the first guide and the first plurality of posts are distinct bodies joined and/or connected by said first set of connectors. Further, the second guide and the second plurality of posts are distinct bodies, joined and/or connected by said second set of connectors.

According the invention, the supporting structure (the system) comprises a first plurality of connecting arms (first set of connectors). The first plurality of connecting arms is connected to the first plurality of posts. The first plurality of connecting arms is connected to the corresponding first rail.

The supporting structure (the system) comprises a second plurality of connecting arms (second set of connectors). The second plurality of connecting arms is connected to the second plurality of posts. The second plurality of connecting arms is connected to the corresponding second rail.

Each connecting arm of the first and/or the second plurality of connecting arms includes a respective first portion. In an embodiment, each arm of the first and/or the second plurality of connecting arms includes a respective second portion. The second portion of each connecting arm is movable relative to the first portion to vary, in use, the (transverse) length of each connecting arm of the first and/or the second plurality of connecting arms. This transverse adjustment could, for example, make the farming system suitable for different fruit/vegetable species, since the transverse dimension varies according to the crop species.

In an embodiment, each connecting arm of the first and/or the second plurality of connecting arms is configured to vary its vertical position. For example, each connecting arm of the first and/or the second plurality of connecting arms is connected to the respective first and/or second plurality of posts by a respective movable fastener, which is adjustable along the vertical direction to allow the corresponding connecting arm to move along the vertical direction.

In an embodiment, the system comprises a third plurality of plants, disposed along a third longitudinal axis. The third longitudinal axis is spaced from the second longitudinal axis along the transverse direction to form a third row. In an embodiment, the supporting structure comprises a third plurality of posts for the third row.

In an embodiment, the system comprises a third rail. The third rail is connected to the second plurality of posts, preferably on the side opposite to the side where the second rail is connected. The system comprises a fourth rail, connected to the third plurality of posts. The fourth rail is spaced from the third rail to define an additional track on which the trolley is movable.

In an embodiment, the system (the supporting structure) comprises connecting portions. The connecting portions are joined to the track and/or to the additional track. The track and the additional track are thus joined to each other.

In an embodiment, the system comprises a self-centring system. The self-centring system is configured to compensate for misalignment between the first rail and the second rail along a vertical direction, perpendicular to the ground. For example, but not necessarily, as stated above, the self-centring system might include some of the elastic elements - that is, those connected to the group of longitudinal rolling elements. This allows keeping the longitudinal rolling elements in contact with the rail even if the first rail or the second rail sags.

In an embodiment, the trolley comprises a work position from where an operator can work. The trolley comprises a user interface. The user interface is configured to allow the operator to send control signals for controlling operations, capturing data and moving the trolley.

In an embodiment, the one or more operational devices are configured to perform one or more of the following operations on the plurality of plants or on the soil:
- inter-row mowing;
- in-row weeding;
- anti-parasite treatments;
- sowing;
- monitoring;
- harvesting;
- pruning;
- thinning out;
- on-the-spot inspection;
- maintenance to the supporting structure;
- operations on other structures (e.g. hail nets).

In an embodiment, the first plurality of posts comprises a first group, having a first dimension, and a second group, having a second dimension, smaller than the first dimension. In an embodiment, the second plurality of posts comprises a first group, having a first dimension, and a second group, having a second dimension, smaller than the first dimension.

It should be noted that the second group of posts of the first plurality of posts and of the second plurality of posts is shorter than the first group of posts of the first plurality of posts and of the second plurality of posts. Further, the first group of posts of the first plurality of posts and of the second plurality of posts is configured to support the first and the second rail, respectively, and also to support the plants as they grow.

On the other hand, in an embodiment, the second group of posts of the first plurality of posts and of the second plurality of posts is configured to support the first and the second rail, respectively, but not to support the plants. In effect, each connecting arm of the first plurality of connecting arms is connected to a respective end, distal from the soil, of a corresponding post which belongs to the second group of posts (the short posts) of the first plurality of posts. Also, each connecting arm of the second plurality of connecting arms is connected to a respective end, distal from the soil, of a corresponding post which belongs to the second group of posts (the short posts) of the second plurality of posts.

In some embodiments, the posts of the first and the second plurality of posts might include only posts of the second group of posts (the short posts) adapted to support only the track, whilst the plants are supported by specific stakes (or a string hanging from a wire).

In other words, the posts of the first plurality of posts and/or the posts of the second plurality of posts are different in size.

Not according to the invention, it is further disclosed a platform (or movable platform, or trolley, or movable trolley) for row crop farming.

The platform comprises a frame. The platform comprises one or more working units. Each working unit comprises an operational device. The operational device is configured to perform predetermined operations (or data capturing) on the installation. Each working unit comprises a corresponding arm. The arm is removably connected to the frame. The arm is (removably) connected to the work tool to allow the tool to be moved.

It should be borne in mind that the arm is an optional part and that an embodiment in which each operational device is connected directly to the frame is possible.

The platform comprises a plurality of rolling elements. The plurality of rolling elements are connected to the frame. Each rolling element is contact with a track on which the platform runs.

In an embodiment, the platform comprises a plurality of elastic elements. Each elastic element of the plurality is connected to a corresponding rolling element. Each elastic element of the plurality of elastic elements is preloaded so it applies a contact force between the respective rolling element and the track.

Not according to the invention, it is further disclosed a supporting structure for a row crop farming installation.

The structure comprises a first plurality of posts. The first plurality of posts is disposed on a first row. Each post of the first plurality of posts is spaced from the other posts of the plurality along a first longitudinal axis.

The structure comprises a second plurality of posts. The second plurality of posts is disposed on a second row. Each post of the second plurality of posts is spaced from the other posts of the plurality along a second longitudinal axis. The second row is spaced transversely from the first row. The structure comprises a first rail, connected to the first plurality of posts. The structure comprises a second rail, connected to the second plurality of posts. The first rail is spaced from the second rail to define a track running along the longitudinal direction.

The structure comprises a first plurality of connecting arms, joined to the first plurality of posts and/or to the first rail. The structure comprises a second plurality of connecting arms, joined to the second plurality of posts and/or to the second rail.

According to a further aspect of it, this disclosure provides a method for farming a row crop installation.

The method comprises a step of preparing a first plurality of plants. The method comprises a step of preparing a second plurality of plants. The first and the second plurality of plants are disposed along a first and a second longitudinal axis, respectively, and are spaced from each other along a transverse direction to form a first and a second row. The plants of each row extend in two dimensions in a corresponding vertical plane passing through the respective longitudinal axis.

The method comprises a step of supporting the first plurality of plants by means of a supporting structure, specifically and preferably by means of a first plurality of posts. The method comprises a step of supporting the second plurality of plants by means of a supporting structure, specifically and preferably by means of a second plurality of posts.

The posts of the first and the second plurality of posts are disposed along the corresponding first and second row and are spaced from each other along the corresponding first and second longitudinal axis.

The method comprises a step of connecting a first rail to the first plurality of posts. The method comprises a step of connecting a second rail to the second plurality of posts. The first and the second rail are oriented longitudinally. The first and the second rail are spaced from each other transversely to define a track.

In an embodiment, the method comprises a step of moving a trolley along the track, preferably by means of a movement actuator, which is preferably housed on the trolley itself.

In an embodiment, the method comprises an operating step in which one or more operational devices perform work on, and/or capture data from, the plants. The one or more operational devices capture information relating to the plants, the soil, the grass covering and micro-climate conditions.

In an embodiment, the method comprises a step of moving a first wall and a second wall of the trolley relative to each other by means of an adjustment system. In the step of moving, the first wall remains fixed relative to the track, whilst the second wall moves relative to the first wall and relative to the track.

The method comprises a step of adjusting, in which an adjustment system adjusts the inclination of the second wall to keep it preferably perpendicular to the direction of the weight force.

The method comprises a step of working on, or capturing information from, the soil, in which a first device of the one or more operational devices performs work on the soil and/or captures information relating to the soil. The method comprises a step of working on, or capturing information from, the fruit tree, in which a second device of the one or more operational devices performs work on the plants and/or captures information relating to the plants.

In an embodiment, the method comprises a step of changing, in which a change station allows the one or more operational devices (the first device or the second device) to be changed automatically and/or manually. The change station changes the one or more operational devices (the first device or the second device) automatically and/or manually.

In an embodiment, the method comprises a step of rolling, in which a plurality of rolling elements roll in order to allow the trolley to move along the rail.

In an embodiment, the method comprises a step of pressing, in which a plurality of elastic elements, each associated with a respective rolling element, apply on the respective rolling element a force towards the track so as to keep the track and the rolling element in contact with each other. The plurality of rolling elements comprises a group of transverse rolling elements which rotate about a respective axis of rotation parallel to the vertical plane defined by the corresponding row.

In an embodiment, the plurality of rolling elements comprises a group of longitudinal rolling elements which rotate about a respective transverse axis of rotation, parallel to the transverse direction.

In an embodiment, the method comprises a step of preloading, in which the plurality of elastic elements are preloaded before being connected to the respective rolling element.

In an embodiment, the method comprises a step of controlling. In the step of controlling, a control unit performs one or more of the following steps:
- determining the position of the trolley on the track, relative to the installation;
- detecting obstacles encountered as the trolley moves along the track;
- sending the data captured, representing information regarding the plants. In the step of controlling, a remote control terminal sends drive signals to the control unit of the trolley to instruct it to move the trolley along a predetermined path.

The remote terminal comprises a user interface through which a user enters path information and/or operational information, as a function of which the control terminal generates the drive signals.

In an embodiment, the control unit of the trolley captures data, saves the captured data to a memory, processes the captured data to generate predictive models and saves the predictive models to the memory, or processes the captured data according to existing models, generates control signals as a function of the captured data and of the models used and sends the control signals to the movement actuator and/or to the one or more operational devices.

In an embodiment, the control terminal receives the captured data from the control unit of the trolley, saves the data to a remote memory, processes the captured data according to existing models or generates new models and, optionally, saves the predictive models to the remote memory, generates the drive signals as a function of the captured data and of the models used and sends the drive signals to the movement actuator and/or to the one or more operational devices.

The term "predictive models", or "decision making models", is used to mean an algorithm configured to receive the captured data as input and to send control signals as output representing activities to be carried out with the trolley (for example, forward movements and operations on the plants). These decision making models are entered manually by a user by programming or are generated automatically by the remote terminal or by the control unit based on data collected over time, which allow correlations to be established to define the predictive or decision-making models.

In an embodiment, the method comprises a step of charging, in which the trolley is driven to a charging station which is connected to the track and where a power supply charges an electrical energy accumulator.

The method comprises a step of connecting, in which a first plurality of connecting arms is connected to the first plurality of posts. The first plurality of connecting arms is connected to the corresponding first rail. In the step of connecting, a second plurality of connecting arms is connected to the second plurality of posts. The second plurality of connecting arms is connected to the corresponding second rail.

In an embodiment, the method comprises a step of adjusting, in which the (transverse and/or vertical) length of each connecting arm of the first and/or the second plurality of connecting arms is adjusted. In the step of adjusting, a respective first portion of each connecting arm is moved relative to a second portion of each connecting portion to vary the distance of the first or the second guide, hence of the track, from the first or the second plurality of posts.

The method comprises a step of self-centring, in which a self-centring system compensates for misalignment between the first rail and the second rail along a vertical direction, perpendicular to the ground. For example, in the step of self-centring, one or more of the elastic elements keeps the respective rolling element in contact even if the first and the second rail become misaligned.

In an embodiment of the method, the trolley can be used manually by a user working from a trolley work position from where control signals can be sent through a trolley user interface to control operations, capture information and drive the movements of the trolley.

In an embodiment, the one or more operational devices perform one or more of the following operations on the plurality of plants or on the soil:
- inter-row mowing; in-row weeding; anti-parasite treatments; sowing; monitoring; harvesting; pruning; thinning out; on-the-spot inspection.

### Brief description of the drawings

This and other features are described in more detail below with reference to a preferred, non-limiting example embodiment, with reference to the accompanying drawings, in which:

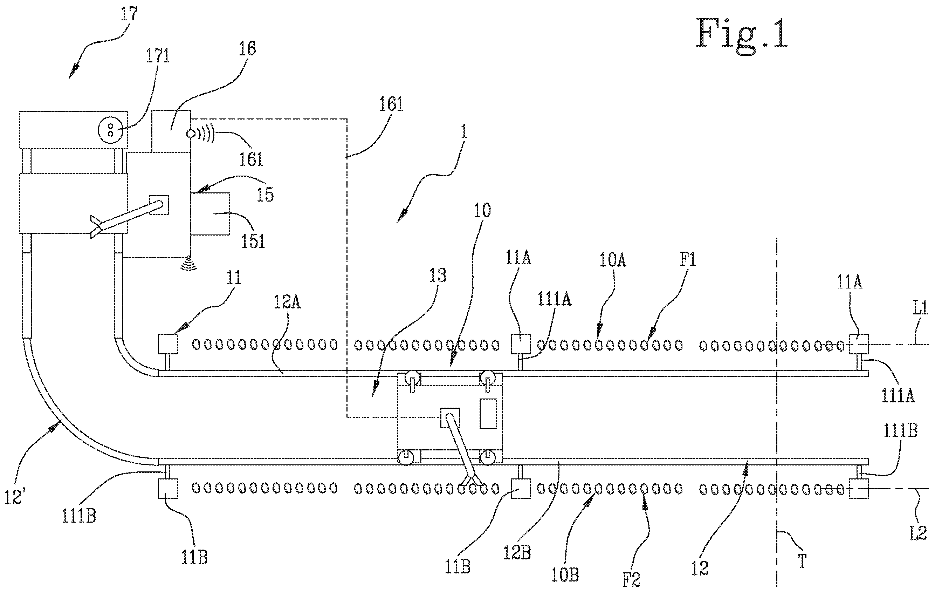

- Figure 1 shows a schematic plan view of a farming system for row crop installations;

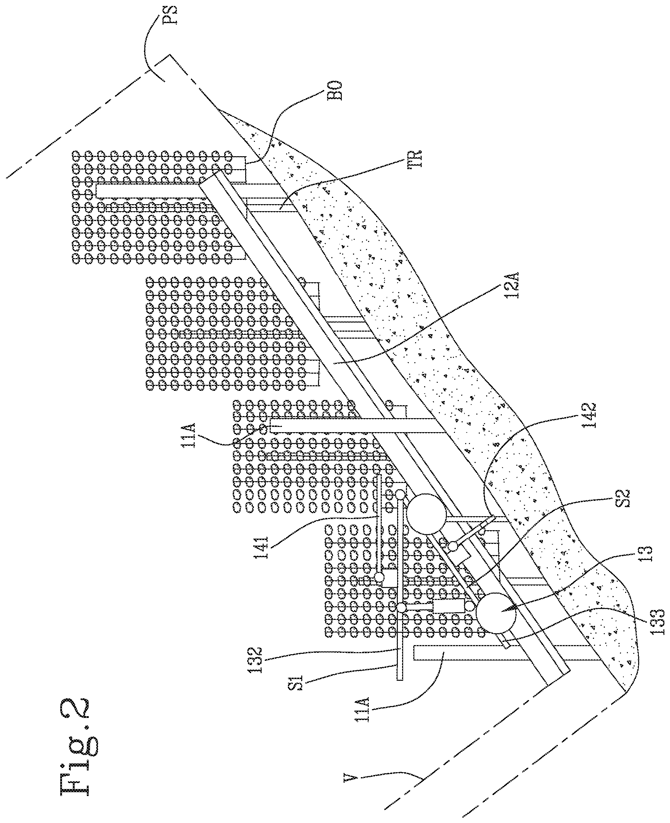

- Figure 2 shows a schematic side view of the farming system for row crop installations of Figure 1;

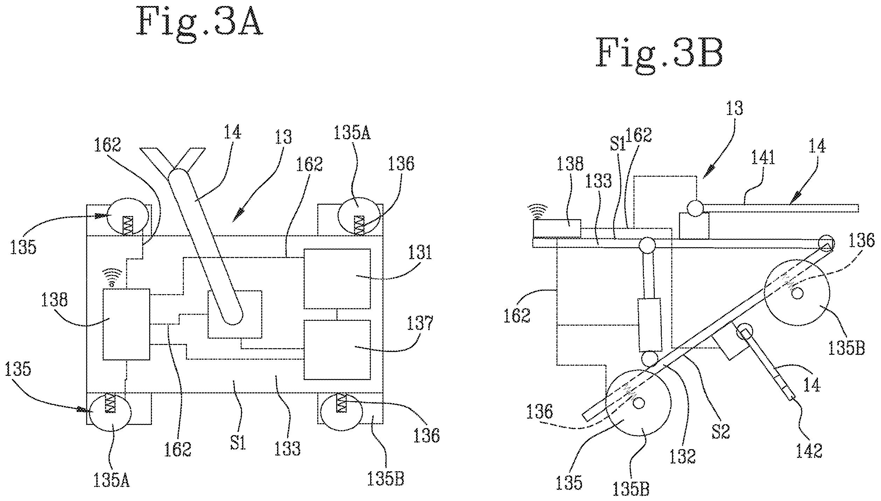

- Figures 3A and 3B show, respectively, a plan view and a side view of a movable platform for a row crop farming installation;

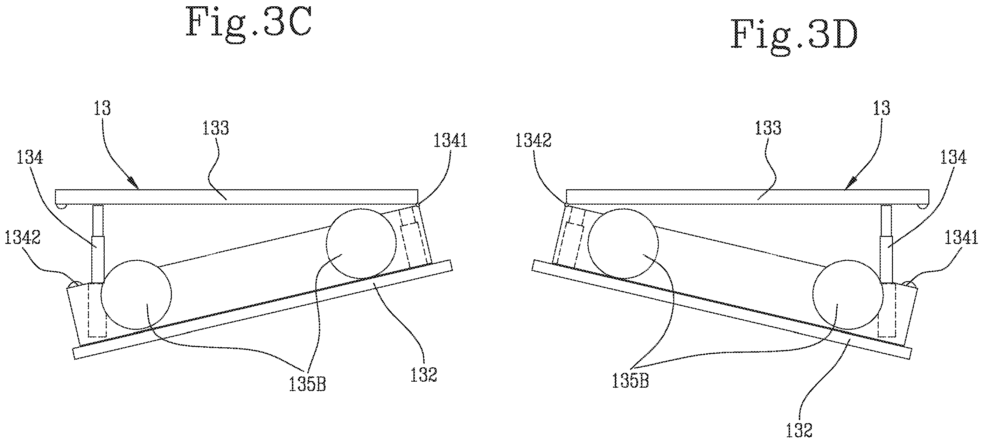

- Figures 3C and 3D show, respectively, a first side view and a second side view of an embodiment of a movable platform for a row crop farming installation;

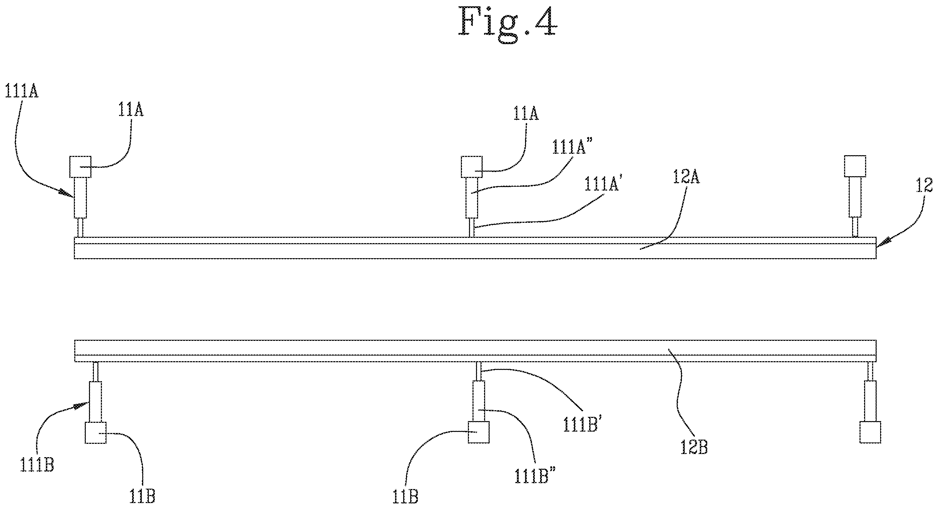

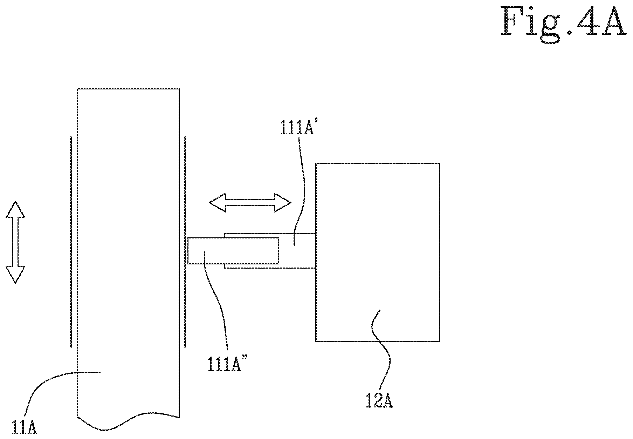

- Figure 4 shows a schematic plan view of a supporting structure used for a row crop farming installation;
- Figure 4A schematically illustrates a detail of a connecting arm of the supporting structure of Figure 4;

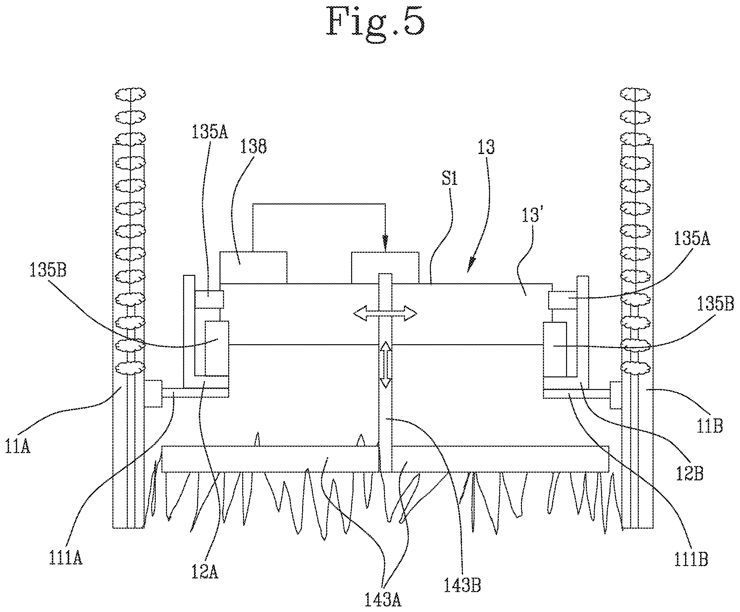

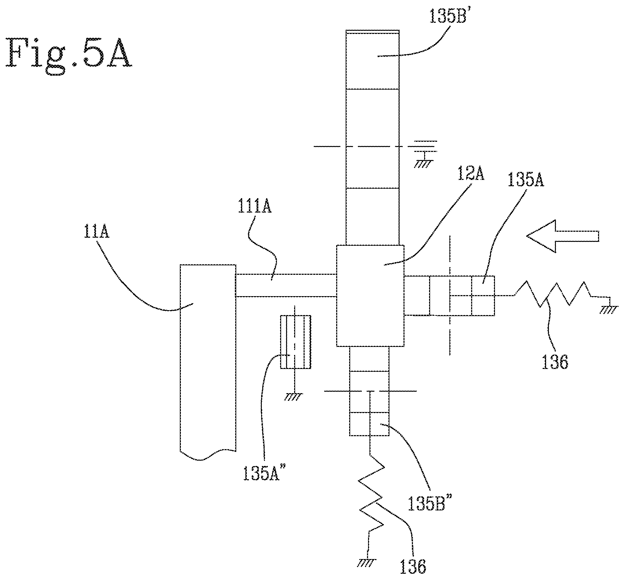

- Figure 5 schematically illustrates the movable platform of Figures 3A and 3B equipped with a mowing tool;
- Figure 5A schematically illustrates a detail of an embodiment of the movable platform of Figures 3A and 3B;

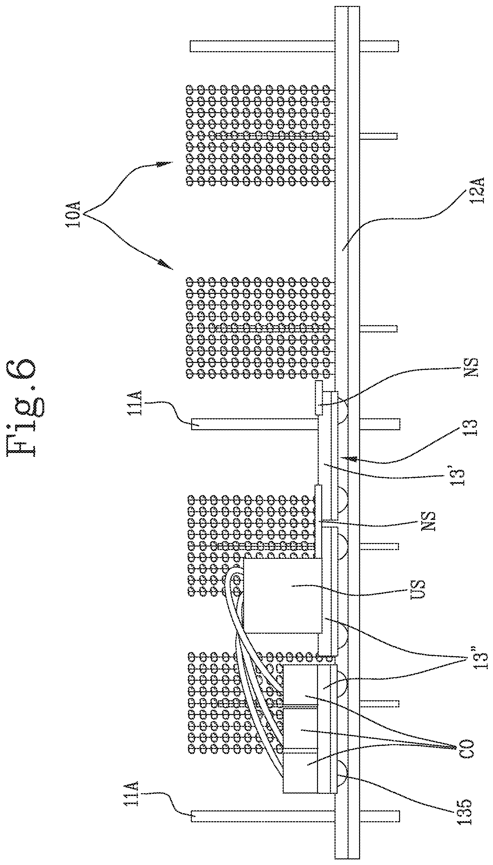

- Figure 6 schematically illustrates an embodiment of the system of Figure 1 used in harvesting operations, for example, to harvest fruit from an orchard;

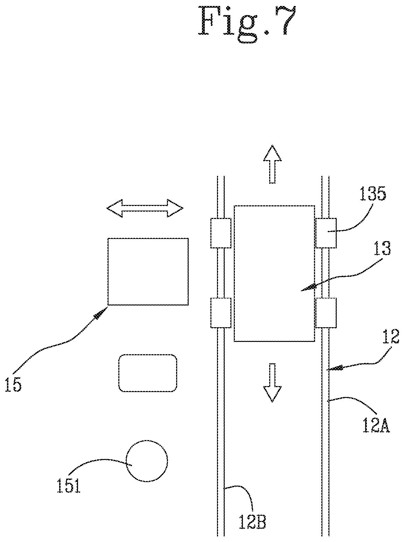

- Figure 7 shows a schematic plan view of the system of Figure 1 according to a possible embodiment of it.

### Detailed description of preferred embodiments of the invention

With reference to the accompanying drawings, the numeral 1 denotes a system for a row crop farming installation.

The system 1 comprises a first plurality of plants 10A. The first plurality of plants 10A is disposed along a first longitudinal axis L1. The system comprises a second plurality of plants 10B. The second plurality of plants 10B is disposed along a second longitudinal axis L2. The first plurality of plants 10A and the second plurality of plants 10B are mutually spaced along a transverse direction T, perpendicular to the first longitudinal axis L1 and to the direction of the weight force, to form a first row F1 and a second row F2, respectively. The plants of the installation extend in two dimensions: that is to say, the extend in a respective plane of extension, defined by the vertical direction V and by the respective first longitudinal axis L1 or the second longitudinal axis L2.

Each plant of the first plurality of plants 10A or the second plurality of plants 10B includes a respective main growth axis (stalk or trunk) and a respective set of secondary axes (branches) which extend vertically while remaining in the respective plane of extension PS.

The first and the second plurality of plants 10A and 10B define a row crop installation 10.

In an embodiment, the installation 10 includes a plurality of vertical growth axes which form a two-dimensional canopy (for example, commonly known by the term '2-D' in other systems). This type of installation was created to improve the combination of plant and farming machine in that overcoming the obstacles to near total mechanization necessarily involves simplifying the canopy structure and minimizing the obstacles (large secondary axes such as, for example, boughs and large branches) encountered during the movements of operational farming devices such as, robotic arms capable of manipulating the canopy, by pruning, for example. The system 1 described in this disclosure allows reducing row spacing by optimizing the penetration (or keeping the optimum penetration) of light in the canopy, which is fundamental to increasing yields per hectare while keeping fruit quality at top levels, which is a requisite essential for the economic success of the crop.

More specifically, in an embodiment, the first row F1 and the second row F2 are transversely spaced by a spacing less than or equal to 2 m. Preferably, the first row F1 and the second row F2 are transversely spaced by a spacing less than or equal to 1.5 m.

In an embodiment, the production axes of the plants of the first and/or the second plurality 10A, 10B are spaced from each other along the respective first or second longitudinal axis L1, L2 by a spacing greater than or equal to 2 m, preferably 3 m.

Thus, the crop layout remains the same as that of a traditional installation, so its cost compared to other solutions remains unchanged, but the values of the two dimensions are inverted.

To maintain the advantages of very high density planting, linked to the better exposure to light, combined with optimum light distribution in the canopy, and to facilitate plant-machine interaction as much as possible, the plant canopy is structured in such a way that the number of vertical axes AV which can be placed along two horizontal boughs BO is greater than or equal to 6 (preferably 10 vertical axes AV). The horizontal boughs BO are disposed one on each side of the main axis TR of the respective plant. The vertical axes AV are disposed at a suitable spacing (generally in the order of 20-30 cm), as function of the genetic characteristics of the fruit or vegetable species being cultivated. The vertical axes are trained with tutors (stakes) and supported by piling (first plurality of posts 11A or second plurality of posts 11B, preferably first group of posts of the first plurality of posts 11A or second plurality of posts 11B) and by supporting wires (taut horizontal cables). The vertical axes AV extend vertically to a height between 3.0 and 4.5 metres (preferably between 3.5 and 4.0 metres) as a function of the plant species, variety and rootstock. The vertical axes AV are induced by appropriate cultivating techniques to grow fruit-bearing structures (sprigs, shoots, corymbs) while limiting the leafy (unproductive) growth of the vertical axes AV.

The vertical axes AV constitute the basis of the cultivation techniques. Their number, being known and unvaried over time, makes it possible to decide beforehand the number of fruits per vertical axis AV to maximize the yield and quality of the installation 10.

In an embodiment, the number of pieces of fruit which a single vertical axis produces can be controlled using thinning out machines, configured to thin out the vertical axes AV. In an embodiment, these thinning-out machines (or thinners) comprise a plurality of sensors. Thinning-out machines comprise a control unit, programmed according to artificial intelligence algorithms which recognize the density of the number of flowers present on the axis and to modulate the thinning out density in real time. Protecting this orchard is also achieved by biological control methods, such as encouraging the development of predatory insects, which is a natural consequence of the system 1 according to this disclosure, which allows a mixed vegetation cover to grow tall enough for such predators to complete their biological cycle, with all the beneficial effects that this has. The system 1 comprises a supporting structure 11, configured to support the plants of the installation 10.

The supporting structure 11 includes, for the first row F1, a first plurality of posts 11A (also referred to above by the generic term "piling"). The supporting structure 11 includes, for the second row F2, a second plurality of posts 11B (also referred to above by the generic term "piling").

The posts of the first plurality of posts 11A and/or of the second plurality of posts 11B are disposed along the first longitudinal axis L1 and the second longitudinal axis L2, respectively. The posts of the first plurality of posts 11A and/or of the second plurality of posts 11B are spaced from each other along the first longitudinal axis L1 and the second longitudinal axis L2, respectively.

The posts are driven into the ground of the installation 10. The posts may be made from different materials such as, for example, reinforced concrete or metal.

The system 1 comprises a first rail 12A. The first rail 12A is connected to the first plurality of posts 11A. The first rail 12A is a profiled bar of predetermined shape to allow a rolling element (or sliding element) to move along it.

The system 1 comprises a second rail 12B. The second rail 12B is connected to the second plurality of posts 11B. The second rail 12B is a profiled bar of predetermined shape to allow a rolling element (or sliding element) to move along it.

The first rail 12A and/or the second rail 12B preferably have a rectangular cross section and are preferably made of steel.

The first rail 12A and/or the second rail 12B are spaced from each other transversely to define a track 12.

The first rail 12A and the second rail 12B are connected to the respective first plurality of posts 11A and to the second plurality of posts 11B at a height from the ground greater than zero. In other words, the track 12 is raised off the ground.

The track 12 is preferably parallel to a profile defined by the ground. Looking in more detail, the track 12 (metallic) has a gauge size between 1 m and 2 m, preferably 1 m and hangs approximately 60-80 cm from the ground, centrally between the first row F1 and the second row F2.

In an embodiment, the first rail 12A is connected to the first plurality of posts 11A at a distance of between 10 cm and 40 cm therefrom, preferably at a distance of between 15 cm and 30 cm.

The transverse space between the first rail 12A an the second rail 12B is completely free and, in an embodiment, there are no crossbars connecting the first rail 12A to the second rail 12B of the track 12.

The track 12 follows the contours of the ground, remaining at a constant height from the ground and may therefore have a considerable slope. The track 12 follows the path of the row and may therefore be curved (or include curved zones or connection zones).

In an embodiment, the supporting structure 11 is totally passive. In other words, there are no energy, drive or control systems mounted on the supporting structure 11. In other embodiments, the posts might be powered and might therefore act as power supplies for a platform in transit on the track 12.

The supporting structure 11 is designed using assembly solutions and materials that minimize installation costs and which ensure a working life of several dozens of years and which can therefore be re-used after the end of the life cycle of the crop.

In an embodiment, the supporting structure 11 (the system) comprises a first plurality of connecting arms 111A. The first plurality of connecting arms 111A is connected to the first plurality of posts 11A and to the first rail 12A. In an embodiment, the supporting structure 11 (the system 1) comprises a second plurality of connecting arms 111B. The second plurality of connecting arms 111B is connected to the second plurality of posts 11B and to the second rail 12B.

The first plurality of connecting arms 111A and the second plurality of connecting arms 111B allow the rail to be correctly positioned even if the first and the second plurality of posts 11A, 11B are not perfectly aligned or the first or second plurality of posts 11A, 11B has shifted relative to the respective longitudinal axis L1, L2.

Each connecting arm of the first plurality of connecting arms 111A and/or the second plurality of connecting arms 111B includes a respective first portion 111A', 111B'. In an embodiment, each connecting arm of the first plurality of connecting arms 111A and/or the second plurality of connecting arms 111B includes a respective second portion 111A", 111B". The second portion 111A", 111B" of each connecting arm is movable relative to the first portion 111A', 111B' to vary, in use, the (transverse) length of each connecting arm of the first plurality of connecting arms 111A and/or the second plurality of connecting arms 111B.

By way of an example only, the first portion 111A', 111B' might be an (externally) threaded rod, whilst the second portion 111A", 111B" might be an internally threaded hollow rod configured to be coupled to the thread of the threaded rod. That way, screwing or unscrewing the first portion 111A', 111B' to or from the second portion 111A", 111B" varies the length of the respective connecting arm.

In an embodiment, the second portion 111A", 111B" of each connecting arm is movable relative to the post 11A, 11B to vary, in use, the (vertical) length of each connecting arm of the first plurality of connecting arms 111A and/or the second plurality of connecting arms 111B.

By way of an example only, the second portion 111A", 111B" might be an element surrounding the post, configured to be press fitted to the post by means of bolts. That way, by screwing and unscrewing the bolts, the second portion 111A", 111B" can be repositioned and locked at a different height on the post 11A, 11B.

The system 1 comprises a trolley 13 (or movable platform 13). The trolley 13 is coupled to the first rail 12A and to the second rail 12B. Thus, the trolley 13 is movable along the track 12.

In an embodiment, the trolley 13 includes a movement actuator 131. The movement actuator 131 is configured to move the trolley 13 on the track 12. The movement actuator is preferably an electric actuator.

In an embodiment, the trolley comprises one or more operational devices 14. The one or more operational devices 14 are configured to perform work on the plants. The one or more operational devices 14 are configured to capture information relating to the plants.

The one or more operational devices 14 may be tongs, pincers, shears, beaters or any other mechanical device suitable for carrying out work on the soil or on the tree. The one or more operational devices 14 may be cameras, optical sensors in general, thermal sensors, distance sensors, pressure sensors or any other measuring device capable of capturing parameters associated with the installation 10.

The trolley 13 comprises a frame 130. The frame 130 includes a first wall 132. The frame 130 includes a second wall 133. The first wall 132 defines a first working surface S1, preferably facing the soil. The second wall 133 defines a second working surface S2, preferably facing a direction opposite to the first working surface S1.

In an embodiment, the first wall 132 and the second wall 133 are movable relative to each other. In an embodiment, the first wall 132 is parallel to the track 12.

In an embodiment, the second wall 133 rotates about a horizontal axis of rotation (preferably parallel to the transverse direction) which may be at a front end of the trolley 13 or at a rear end of the trolley 13 (along the direction of movement). The second wall 133 rotates about a hinge located at a front end of the trolley 13 or at a rear end of the trolley 13. In an embodiment, the second wall 133 rotates about a first hinge 1341 located at a front end of the trolley 13 and about a second hinge 1342 located at a rear end of the trolley 13.

More specifically, in this embodiment, the first hinge 1341 and the second hinge 1342 are movable between a first, locked configuration CB1, CB2, in which the first wall 132 and the second wall 133 are forced to rotate about it, and a second, disengaged configuration CS1, CS2, in which the first wall 132 and the second wall 133 are not locked and can be spaced from each other.

When the trolley 13 is moving up a sloping stretch, the first hinge 1341 is in the locked configuration CB1, while the second hinge 1342 is in the disengaged configuration CS2. When the trolley 13 is moving down a sloping stretch, the first hinge 1341 is in the disengaged configuration CS1, while the second hinge 1342 is in the locked configuration CB2. The system 1 (the trolley 13) comprises an adjustment system 134, interposed between the first wall 132 and the second wall 133 to move them relative to each other. More in detail, the adjustment system 134 is configured to adjust the inclination of the second wall 133 relative to the first wall 132 and/or relative to the track 12.

The adjustment system 134 is configured to move and/or incline the second wall 133 to keep it substantially perpendicular to the weight force and thus to allow it to carry out the required work on the vertical axes AV of the plants.

In an embodiment, the trolley 13 comprises a plurality of movement elements 135, which may be rolling elements 135 or sliding elements - for example, a wear skid which slides on the first rail 12A or on the second rail 12B.

Each rolling element 135 is in contact with the track 12 to allow the trolley 13 to move on the track 12.

Some of the rolling elements 135 of the plurality are drive rolling elements, that is to say, they are driven by the movement actuator 131, whilst other rolling elements are idle rolling elements, which are caused to roll by the rolling friction with the rail. In an embodiment, the drive rolling elements are all longitudinal rolling elements.

In an embodiment, the trolley 13 comprises a plurality of elastic elements 136, each elastic element 136 being associated with a respective rolling element 135.

In an embodiment, the plurality of rolling elements comprises a group of transverse rolling elements 135A. Each transverse rolling element 135A is oriented in such a way as to rotate (it is operatively rotatable) about a respective axis of rotation which is parallel to the vertical plane defined by the corresponding row F1, F2. In other words, the transverse rolling elements 135A are wheels which act as lateral guides on which the rail applies a constraining force directed along the transverse direction T. These wheels are configured to prevent the trolley 13 from sliding in the plane defined by the first longitudinal axis L1 and the second longitudinal axis L2.

In an embodiment, the plurality of rolling elements 135 comprises a group of longitudinal rolling elements 135B. Each longitudinal rolling element 135B is oriented in such a way as to rotate (it is operatively rotatable) about a respective transverse axis of rotation which is parallel to the transverse direction T. In other words, the longitudinal rolling elements 135B are wheels which support the weight of the trolley 13 and on which the rail applies a constraining force directed along the vertical direction.

In an embodiment, the elastic elements 136 are preloaded in such a way as to apply a contact force on each rolling element 135, so as to ensure that the rolling element 135 remains in contact with the corresponding first or second rail 12A, 12B.

Described below by way of example is a preferred embodiment for the coupling between the trolley 13 and the track 12, specifically between the trolley 13 and the first or the second rail 12A, 12B.

More specifically, in an embodiment, for each first or second rail 12A, 12B, the trolley 13 comprises a longitudinal driving rolling element 135B', connected rigidly to the trolley 13 and in contact with the respective first or second rail 12A, 12B. Instead, for each first or second rail 12A, 12B, the trolley 13 comprises an idle rolling element 135B", connected to a respective elastic element of the plurality and rotating idly. The longitudinal driving rolling element 135B' is disposed above the respective first or second rail 12A, 12B. The longitudinal idle rolling element 135B" is disposed under the respective first or second rail 12A, 12B.

The trolley 13 also comprises a transverse rolling element 135A, in lateral contact with the rai and preloaded by a corresponding elastic element. The trolley 13 also comprises a second transverse rolling element 135A', which is normally not in contact with the rail 12A and which acts as a fall safety device which sets a limit to the sideways displacement of the trolley, thereby preventing the wheels 135B from slipping off the rail 12A.

In an embodiment, the trolley 13 comprises an electrical energy accumulator 137. The energy accumulator 137 is connected to the movement actuator 131 to power the actuator.

The trolley 13 is configured to move along the track 12 in both directions. Preferably, the trolley 13 measures 80x120 cm in plan view.

The connection of the trolley 13 to the track 12 by the plurality of rolling elements 135 and the plurality of elastic elements 136 ensures that the driving force is correctly transmitted and the trolley 13 held securely under all working conditions of the system 1 such as, for example, steep slopes and wet rails.

The coupling between the plurality of rolling elements 135 and the track 12 allows the trolley 13 to be held in the correct position even when the rails are misaligned vertically and transversely relative to a predetermined reference position. The system 1 comprises an automatic maintenance system, configured to detect the misalignment of the trolley 13 relative to a horizontal and transverse plane. The automatic maintenance system is configured to compare the detected misalignment with a limit misalignment and, based on this comparison, to issue a maintenance request for the first and second rails 12A, 12B to be repositioned manually.

More specifically, in an embodiment, the misalignment is detected by the automatic maintenance system, which measures the displacement of the movable part relative to the part that is locked to the trolley by the elastic elements connected to the longitudinal and transverse rolling elements. The displacement measured is that of the elastic element relative to a (predetermined) neutral position, until reaching a mechanical limit stop.

In the automatic maintenance system, the displacement of the movable parts at the elastic elements is placed in relation to the position of the trolley on the track. This allows identifying points where alignment is lost, so that infrastructure maintenance operations can be programmed.

The energy accumulator 137 is configured to provide the system components (the movement actuator 137, the operational devices 14 and portable tools) with a 48 Vdc power supply. Other voltages may be provided according to requirements.

The energy accumulator 137 comprises a lithium-ion battery pack. The battery pack is rechargeable. The energy accumulator 137 includes an electrical connection for conductive charging or, alternatively or in addition, inductive charging. The energy accumulator 137 is housed in a compartment in the trolley 13, allowing an energy accumulator 137 that is flat to be quickly replaced with a fully charged energy accumulator 137. According to an aspect of this disclosure, when the trolley 13 returns to the charging station, the electrical interface 171 moves automatically into contact with (or automatically faces) a corresponding connector of the charging station so as to start charging operations directly. In an embodiment, the electrical interface is located on a side wall of the trolley 13 perpendicular to the direction of movement of the trolley 13 on the track.

The trolley 13 comprises a control unit 138, configured to control the one or more operational devices 14 and the movement actuator 131.

In an embodiment, the energy accumulator 137 provides a power supply for the movement actuator 131, the control unit 138 and the one or more devices 14.

In an embodiment, the control unit 138 is configured to control the position of the trolley 13 along the track 12. More specifically, the control unit 138 is configured to control the absolute position of the platform on the installation 10 with a precision in the order of centimetres, for example, between 1 and 20 centimetres (preferably between 5 and 10 cm). The control unit 138 is configured to control the speed of movement. The control unit 138 is configured to control accelerations and decelerations based on predetermined drive curves entered manually by an operator or stored in its memory or sent through the remote terminal.

The trolley 13 comprises an obstacle sensor, configured to detect obstacles encountered by the trolley 13 in transit along the track 12.

The trolley 13 comprises a protection system which is configured to remove small obstacles (branches, leaves) from the first rail 12A or the second rail 12B and which is configured to manage impacts against the branches of the installation 10. The protection system of the trolley 13 is configured to bring the trolley to an immediate stop if it encounters dangerous obstacles.

The control unit is configured to receive an operating program from the user or, alternatively or in addition, is configured to determine an optimum program through artificial intelligence algorithms. Once the program has been entered or the trolley 13 activated, the control unit 138 is configured to manage operations fully automatically, controlling the movements on the track 12, the replacement of the one or more devices 14 and the charge of the energy accumulator 137.

The control unit 138 is configured to determine an optimum speed of movement, based on the type of operation to be carried out on the soil or on the plants of the installation 10.

The control unit 138 is programmable to achieve a predetermined goal, as a function of which the artificial intelligence algorithms determine optimum operating conditions in terms of speed of movement and energy consumption. For example, the control unit may be set to energy optimization, hence low speed of movement (for example, for trimming and ground cleaning operations) or it may be set to minimize execution times, hence higher speed of movement and higher energy consumption. The control unit 138 is programmed to take the energy accumulator 137 back to a charging station when the charge of the energy accumulator 137 reaches a limit value.

In an embodiment, the control unit 138 is configured to communicate with a remote terminal through a wireless connection, preferably broadband. That way, the remote terminal can receive video tracks, telemetric data relating to the energy system, information regarding the functioning of the trolley 13 itself or of the one or more operational devices 14.

The control unit 138 comprises a set of communication channels, configured to allow sending physical data relating to the installation 10, processed for monitoring the installation 10 and for implementing precision farming methods.

In an embodiment, the one or more operational devices 14 include a first device 141 and/or a second device 142. The first device 141 is connected to the first working surface S1. The first device 141 is configured to perform work on the soil and/or to capture information relating to the soil. The second device 142 is connected to the second working surface S2. The second device 142 is configured to perform work on the plants and/or to capture information relating to the plants.

In an embodiment, the one or more operational devices 14 are configured to perform one or more of the following operations on the plurality of plants or on the soil:
- inter-row mowing; in-row weeding; anti-parasite treatments; sowing; monitoring; harvesting; pruning; thinning out; on-the-spot inspection. Looking in more detail, inter-row mowing is done by a mowing tool 143 installed on the second working surface S2 of the trolley 13. The mowing tool 143 comprises a blade. The mowing tool 143 comprises a pair of blades 143A, mounted on a rotary and/or side shift support 143B.

Shifting the support 143B sideways allows the mowing tool 143 to work in the inter-row strip adjacent to the one where the track 12 is located.

That way, as it moves along a row, the mowing tool 143 cuts the grass between the rows along which the trolley 13 is moving and on 50% of the two adjacent inter-row strips on each side (along the transverse direction T).

The mowing tool 143 is configured to coordinate the position of the blade with the position of the trolley 13 so as to describe blade working trajectories which fully cover the full surface of the inter-row strip to be treated without impacting against the posts and trunks planted in the ground.

The mowing tool 143 can be adjusted in height manually or through a dedicated actuator, so as to set a desired cutting height.

In-row weeding is done by a weeding tool 143 installed on the second working surface S2 of the trolley 13. The weeding tool is an operational device equipped with rotary blades or brushes that rotate about a vertical axis or a horizontal axis. The rotary blades are coupled to an electric drive motor. The operational device is movable towards the row strip, for example by varying its length, with electrical actuators, to reach the main axis of the plant. The position of the weeding tool is adjustable along the vertical direction and the direction transverse to the row.

The operation to spray phytosanitary products (or anti-parasite treatments) is done by a spraying system which includes at least one spraying tool installed on the first working surface S1 of the trolley 13.

The spraying system comprises two columns placed at the sides of the trolley 13 and a tank containing the liquid to be sprayed. The spraying system comprises blowing elements, configured to spread the sprayed liquid.

The blowing elements are, for example, electric fan units and/or superposed fan ducts.

The electric fans are configured to operate at controlled speed according to programmed cycles in order to create a correct flow of air to enable the sprayed fluid to settle on leaves and fruit from a very close distance (for example, 20-40 cm, preferably 30 cm, from the leaves).

This allows obtaining the following advantages:
- minimizing the energy requirement of the spraying system.
- treating both surfaces of the plant with a single pass.
- implementing selective spraying, applied only on specific zones
- minimizing dispersion of the sprayed substance into the environment.
- minimizing the total quantity of liquid sprayed, thus minimizing the size of the tank.

The control unit 138 is configured to control the spraying system, for example, to control the correct positioning of the electric fan units so the substance is blown directly on the leafy surface and not on the parts of the plants without leaves. In an embodiment, the operation of the spraying system is intermittent. Each cycle of the spraying system is carried out at a growth axis AV, from where the produce grows, spaced along the respective longitudinal axis L1, L2 by a distance that varies according to species, cultivar, rootstock, preferably approximately 30 cm.

In an embodiment, the spraying system includes a control, configured to synchronize spraying according to the longitudinal position of the trolley on the track.

In an embodiment, the spraying system comprises a plurality of sensors configured to capture images of the leaves and fruit: the images are processed by the control unit 138 which activates the spraying system selectively and as required.

The plurality of sensors are disposed on the columns at a position ahead of the blowers along the movement path of the trolley 13. That way, image processing and application of the algorithms that choose the operations to be carried out are performed just before the spraying operation and does not affect the speed of the treatment.

In this case, the spraying system is configured to spray the products selectively based on the data captured by the plurality of sensors.

In an embodiment, the operations for thinning out, pruning, harvesting, infrastructure maintenance, placement and maintenance of nets (for protection against hail, insect pests and rain) and/or on-the-spot inspection are carried out in cooperative (harvesting aid) mode: that is to say, they are carried out partly by the system 1 and partly manually by farm personnel.

By using the system 1, all operations carried out manually by farm personnel on the field are made easier, quicker, less wearying and better in quality.

Described below is the harvesting operation. It is understood that all the other farming operations that require the work of personnel on the field are carried out using the same operating principle of the system 1, which, however, implements other accessories such as, for example, electrical pruning shears or saws, which can be powered directly by the energy accumulator 137 of the trolley 13.

In any case, the harvesting operation has some particular features. For example, harvesting is carried out by a train of trolleys. In addition, the trolley used to accommodate personnel comprises a module for manually driving the trolley. In such a case, therefore, the control unit of the trolley 13 manages the safety features (devices) of the trolley.

In an embodiment, the system 1 allows carrying out the steps of sorting and grading the crop, which are not normally carried out on the field and which contribute substantially to increasing the value of the end product. The system 1 thus comprises a harvesting system, which includes:
- a master trolley 13';
- one or more slave trolleys 13";
- a conveyor belt NS.

At least one harvester precedes the master trolley 13' on foot. The master trolley 13' keeps a safe distance from the at least one harvester preceding it on foot. If the distance between the master trolley 13' and the at least one harvester preceding it on foot is less than the safe distance, the control unit 138 of the master trolley 13' brings the master trolley 13' to a stop.

The master trolley 13' comprises at least one work position to receive at least one harvester, working at a greater height than the at least one harvester working on foot. The harvesters are not constrained to working at one position but their position is determined on the basis of product height, that is to say, the height at which the crop is being picked.

The slave trolleys 13" are spaced from the master trolley 13' along the longitudinal direction.

By doubling the number of operators (or reducing the speed of the master trolley 13') it is possible to perform the operations simultaneously on the first row F1 and on the second row F2.

The control unit 138 of the master trolley 13' is configured to adjust the speed of the master trolley 13' in such a way as to keep a constant distance between it and the at least one harvester preceding it on foot, which must be greater than the safe distance at all times. That way, the speed of movement on which the rhythm of harvesting depends is controlled by human personnel.

The master trolley 13' comprises a check-in unit which, through the conveyor belt NS, receives the fruit picked by the operators.

The harvesting system comprises a sorting unit US, located on one of the slave platforms 13". The check-in unit performs the functions of accumulating the harvested fruit crop and conveying it to the sorting unit US.

The sorting unit US is configured to analyse each individual piece of fruit for features such as, for example, size, colour, sugar content, specific weight, diseases, weather damage. As a function of this analysis, the sorting unit US is configured to divide the crop into different grades, depending on species.

The harvesting system comprises one or more containers CO in which the different types and grades of the fruit crop are transported and stored. Each container CO is positioned on a corresponding slave trolley 13". This approach allows differentiated harvesting on the field without in any way slowing down the harvesting process, which is a factor of fundamental importance.

Transfer to the one or more containers CO is accomplished using a system of gravity conveyors or of flexible pneumatic ducts. The first wall 133 is configured to rotate about a transverse axis. That way, by suitably rotating it, the fruit can be distributed uniformly inside the containers CO. The slave trolleys 13" on which the one or more containers CO are loaded can abandon or be added to the train in such a way as to best satisfy the needs of sorting and transporting the full and empty containers to the point of delivery.

In an embodiment, the system 1 comprises a change station 15. The change station 15 is configured to allow the one or more operational devices 14 (the first device 141 or the second device 142) to be changed automatically and/or manually.

The change station 15 comprises a device storage unit 151 in which the one or more devices 14 are stored when they are not mounted on the trolley 13.

In an embodiment, the change station 15 is outside the rows F1, F2 (terminal or intermediate station).

In an embodiment, the change station 15 comprises one or more substations, each of which can serve a respective trolley 13 with regard to electrical charging operations and operations for changing the one or more devices 14.

In an embodiment, the change station 15 is shared by a plurality of installations 10.

The change station 15 comprises a withdrawal system for withdrawing the devices from their storage unit 151, allowing the one or more devices 14 to be replaced quickly and easily.

The one or more devices 14 are located in the storage unit 151 in line in two rows: the bottom row houses the operational devices 14 that will be installed on the second working surface S2; the other row, at the top, houses the devices designed to be installed on the first working surface S1 of the trolley 13. During the operation for changing the device 14, the device 14 is moved from the storage unit 151 horizontally by means of wheel-mounted tool holder carriages which run on specially designed, fixed rails both at ground level and at a higher level. Once the device 14 is at the correct position relative to the trolley 13, the device 14 is hooked to the trolley 13 and unhooked from the tool holder carriage.

In an embodiment, the system comprises a control terminal 16, preferably remote. The control terminal 16 is connected (even without a wireless connection, that is, it is in communication with) the control unit 138 of the trolley 13. The control terminal 16 is configured to send drive signals 161 to the control unit 138 of the trolley 13 to instruct it to move the trolley 13 along a predetermined path.

The remote terminal 16 comprises a user interface, configured to allow a user to enter path information and/or operational information, as a function of which the control terminal 16 is configured to generate the drive signals 161.

In an embodiment, the user interface shows different selectable parameters including, for example, but not limited to, the type of operation to be carried out, the target at which to set the operations (maximizing energy efficiency or speed of execution), the number of trolleys necessary, the type of monitoring required.

In an embodiment, the control unit of the trolley is configured for:
- capturing data through the one or more operational devices 14 when they are, for example, measuring devices;
- saving the captured data to a memory;
- processing the captured data with existing models, that is, to generate predictive models and to save the predictive models to the memory; the predictive models are configured, for example, to recognize a specific type of product according to the colour detected, the organoleptic quality or the shape;
- generating control signals 162 as a function of the captured data and of the predictive models; the control signals 162 represent operations to be carried out with the one or more operational devices 14 or they represent a predetermined movement of the trolley 13;
- sending the control signals 162 to the movement actuator and/or to the one or more operational devices.

In an embodiment, the remote control terminal, when it receives the captured data from the control unit 138 of the trolley 13, can perform the functions performed by the control unit 138, sending directly to the latter the control signals 162 for the movement actuator and/or for the one or more operational devices.

In an embodiment, the system 1 comprises a charging station 17. The charging station 17 is connected to the track 12. The charging station 17 comprises an electrical interface 171. The electrical interface 171 is connectable to the energy accumulator 137 to allow charging it with electrical energy.

In an embodiment, the charging station 17 comprises a photovoltaic cover, configured to produce a quantity of renewable energy sufficient to meet the energy requirement of the system 1.

In an embodiment, the charging station 17 comprises a local accumulation system which is configured to store electrical energy in battery packs similar to those used in the trolleys 13.

The charging station 17 includes a release unit, configured to release a battery pack from the trolley 13. The charging station 17 includes an extraction unit, configured to extract a battery pack from the trolley 13. The electrical interface 171 comprises a plurality of contacts, installed on the charging station 17, which allow the battery pack to be electrically connected automatically.

In the charging station, therefore, it is possible for charging to be carried out mechanically: an assisted manual operation for unloading and loading the platform battery and connecting it to the charging system. Alternatively, or in addition, charging may be conductive or non-conductive carried out through an automatic operation of electrically connecting the energy accumulator 137.

In other embodiments, the electrical interface 171 is a contactless electrical interface for inductive charging of the energy accumulator 137.

The charging station 17 is configured to control battery charging through correct communication with the battery management system (BMS) and through a strategy of optimum battery management in all the energy systems, for example, but not limited to, the management of primary (photovoltaic) generation, the management of the batteries being charged, the management of the batteries being used on the platforms on mission and the management of service requirements.

It should be noted that this disclosure has been limited to describing the embodiment with two rows. It is understood, however, that the disclosure applies to the case including two or more rows. For example, a case where there is a third row, with a corresponding third plurality of plants, disposed along a third longitudinal axis, is also imaginable. In such an embodiment, the supporting structure 11 comprises a third plurality of posts for the third row. Thus, in the space between the second row F2 and the third row, there is an inter-row zone which needs to be treated. For this purpose, the inter-row zone is served by an additional track, defined by a third and a fourth rail.

The third rail is connected to the second plurality of posts 11B, preferably on the side opposite to the side where the second rail 12B is connected.

In an embodiment, the system 1 (the supporting structure) comprises connecting portions 12'. The connecting portions are joined to the track 12 and/or to the additional track. That way, the track 12 and the additional track are joined to each other and the trolley 13 can move between different inter-row zones.

It should be noted that in the case where there are two or more rows, the trolley 13 is able to perform work on the inter-row zone in which it is moving and on half of the inter-row zones on each side it. That means the tracks 12 can be installed alternately, that is to say, in such a way that the trolley 13 can move along one inter-row zone, skip the adjacent one and then move along the next inter-row zone. This substantially reduces the complexity and cost of the system 1.

According to an aspect of it, this disclosure provides a transport system for transporting goods along stretches of highway.

This allows creating a system for moving small-sized goods between inter-regional logistic centres situated, for example, 100-300 km from each other. The system is based on using the space between Jersey barriers (first separator and second separator) between opposite highway lanes to accommodate the track 12 along which energy independent, suitably equipped goods transport trolleys 13 can travel. In an embodiment, the goods transported are the size of a "Europallet" at most. In an embodiment, the speed of travel is kept to between 30 kph and 60 kph. The system comprises a time schedule to control transit in one direction or the other based on time slots.

This transport system has a near zero environmental impact because it uses surface that is already occupied by the highway infrastructure and uses electrical energy in very small quantities. The CO2 emissions of the entire product life cycle per unit of distance and weight of the mass transported could be 90% lower than using traditional road transport systems.

Operating costs may be considered practically negligible and such as to reduce freight cost on heavy traffic highway stretches. Moreover, truck freight loading and unloading charges are avoided.

The transport system comprises receiving stations, configured to receive the goods from the track 12. The receiving station is configured to sort the goods from the track 12 using other, secondary stretches of the system 1 to address the goods to stations very close to customer destinations.

In an embodiment, the platform (the trolley 13) comprises a container, configured to accommodate the loads and disposed on the first working surface S1.

In an embodiment, the transport system comprises intermediate stations located along the track 12, which serve as loading/unloading docks for the trolleys 13. This solution allows the goods to reach sites other than the terminal site along the track line. This aspect thus allows creating secondary logistic centres as a function of freight destinations.

## Claims

1. A farming system (1) for a row crop installation (10), comprising:
- a first plurality of plants (10A) and a second plurality of plants (10B), disposed along a first longitudinal axis (L1) and a second longitudinal axis (L2), respectively, and mutually spaced along a transverse direction (T) to form a first row (F1) and a second row (F2), the plants of each row extending in two dimensions in a corresponding vertical plane (PS) passing through the respective longitudinal axis (L1, L2);
- a supporting structure (11), configured to support the plants and including, for the first row (F1) and the second row (F2), a first plurality of posts (11A) and a second plurality of posts (11B) disposed and spaced from each other along the first and second longitudinal axes (L1) and (L2), respectively,
- a first rail (12A), connected to the first plurality of posts (11A), and a second rail (12B), connected to the second plurality of posts (11B), the first rail (12A) and the second rail (12B) being oriented longitudinally and spaced transversely from each other to define a track (12), spaced from the soil and parallel to a profile defined by the soil;
- a trolley (13), coupled to the first rail (12A) and to the second rail (12B) to be movable along the track (12) and including a movement actuator (131), configured to move the trolley (13) on the track (12),
and comprising a first plurality of connecting arms (111A), connected to the first plurality of posts (11A) and to the corresponding first rail (12A), and a second plurality of connecting arms (111B), connected to the second plurality of posts (11B) and to the corresponding second rail (12B).

2. The system (1) according to claim 1, wherein the trolley (13) comprises one or more operational devices (14) configured to perform work on the installation and to capture information relating to the installation.

3. The system (1) according to claim 2, wherein the trolley (13) comprises a frame (130) including a first wall (132), defining a first working surface (S1) facing the soil, and a second wall (133), defining a second working surface (S2) facing the opposite direction to the first working surface (S1) and wherein the first wall (132) and the second wall (133) are movable relative to each other, and wherein the first wall (132) is parallel with the first rail (12A) and with the second rail (12B).

4. The system (1) according to claim 3, comprising an adjustment system (134), interposed between the first wall (132) and the second wall (133) and configured to adjust the inclination of the second wall (133) to keep it perpendicular to the direction of the weight force.

5. The system (1) according to claim 3 or 4, wherein the one or more operational devices (14) include a first device (141), connected to the first working surface (S1) and configured to perform work in the direction of the soil or capture information relating to the soil, and a second device (142), connected to the second working surface (S2) and configured to perform work on the plants or capture information relating to the plants.

6. The system (1) according to any one of claims 2 to 5, comprising a change station (17), configured to allow the one or more operational devices (14) to be changed automatically or manually.

7. The system (1) according to any one of the preceding claims, wherein the trolley (13) comprises a plurality of rolling elements (135), each in contact with the track (12) and a plurality of preloaded elastic elements (136), each connected to a corresponding rolling element (135) to press it against the track (12), wherein the plurality of rolling elements (135) comprises at least one group of transverse rolling elements (135A), each transverse rolling element (135A) being oriented in such a way as to rotate about a respective axis of rotation parallel to the vertical plane (PS) defined by the corresponding row (F1, F2).

8. The system (1) according to any one of the preceding claims, wherein the trolley (13) comprises a control unit (138) including one or more of the following features:
- a locating module, configured to determine a position of the trolley (13) on the track (12) relative to the installation (10);
- a safety module, configured to detect obstacles encountered as the trolley (13) moves along the track (12);
- a communication module configured to send the data captured, representing information regarding the plants.

9. The system (1) according to claim 8, comprising a remote control terminal (16), connected to the control unit (138) of the trolley (13) and configured to send drive signals (161) to the control unit (138) of the trolley (13) to instruct it to move the trolley (13) along a predetermined path, wherein the control unit (138) of the trolley (13) or the remote control terminal (16) are configured for:
- receiving the captured data;
- saving the captured data to a memory;
- processing the captured data to generate decision-making models;
- generating control data (162) as a function of the captured data and of the decision-making models generated or of the decision-making models already present in the memory.

10. The system (1) according to any one of the preceding claims, wherein the movement actuator (131) is an electric actuator and the trolley (13) comprises an electrical energy accumulator (137), connected to the movement actuator (131) to feed it, and wherein the system (1) comprises a charging station (17), connected to the track (12) and comprising an electrical interface (171) configured to connect the electrical energy accumulator (137) to allow charging with electrical energy.

11. The system (1) according to any of the preceding claims, wherein each arm of the first and the second plurality of connecting arms (111A, 111B) is connected to the respective first and second plurality of posts by a movable fastener, which is adjustable along the vertical direction.

12. The system (1) according to any one of the preceding claims, comprising a third and a fourth plurality of plants, disposed along a respective third and fourth longitudinal axis, the third plurality of plants being spaced transversely from the second plurality of plants (10B) to form a third row and the fourth plurality of plants being spaced transversely from the third plurality of plants to form a fourth row, the third and fourth rows each including a corresponding third and fourth plurality of posts, wherein the system comprises a third rail, connected to the third plurality of posts, and a fourth rail, connected to the fourth plurality of posts and spaced from the third rail to define an additional track on which the trolley (13) is movable, and wherein the trolley is configured to perform operations in a zone between the second and the third row from the track (12) or from the additional track, so as to allow the trolley (13) to move along the rows alternately.

13. A mobile platform (13) for working on a row crop installation (10), comprising:
- a frame (130);
- one or more working units, each including an operational device (14) configured to perform predetermined operations on the installation;
- a plurality of rolling elements (135) connected to the frame (130) and at least partly held in contact with a track (12) on which the platform (13) is slidable,
wherein the plurality of rolling elements comprises a group of transverse rolling elements, each oriented in such a way as to rotate about a respective axis of rotation which is parallel to a vertical plane, defined by a corresponding row and a group of longitudinal rolling elements, each oriented in such a way as to rotate about a respective transverse axis of rotation which is parallel to the transverse direction,
wherein the frame (130) includes a first wall (132), defining a first working surface (S1) facing the soil, and a second wall (133), defining a second working surface (S2) facing the opposite direction to the first working surface (S1) and wherein the first wall (132) and the second wall (133) are movable relative to each other, and wherein the first wall (132) is parallel to rails,
wherein the operational devices (14) include a first device (141), connected to the first working surface (S1) and configured to perform work on of the soil or capture information relating to the soil, and a second device (142), connected to the second working surface (S2) and configured to perform work on the plants or capture information relating to the plants.

14. A method for farming a row crop installation (10), comprising the following steps:
- preparing a first plurality of plants (10A) and a second plurality of plants (10B), disposed along a first and a second longitudinal axis (L1, L2), respectively, and mutually spaced along a transverse direction (T) to form a first row (F1) and a second row (F2), the plants of each row extending in two dimensions in a corresponding vertical plane (PS) passing through the respective longitudinal axis (L1, L2);
- supporting the first and the second plurality of plants (10A, 10B) by means of a supporting structure (11) including a first and a second plurality of posts (11A, 11B), respectively, the posts of the first and the second plurality of posts (11A, 11B) being disposed along the corresponding first and second row (F1, F2) and being spaced from each other along the corresponding first and second longitudinal axis (L1, L2),
- connecting a first rail (12A) to the first plurality of posts (11A), and connecting a second rail (12B) to the second plurality of posts (11B), the first and second rails (12A, 12B) being oriented longitudinally and spaced transversely from each other to define a track (12);
- moving a trolley (13) along the track (12) by means of a movement actuator (131),
wherein in the step of connecting, a first plurality of connecting arms (111A) connect the first plurality of posts (11A) to the corresponding first rail (12A), and a second plurality of connecting arms (111B), connected to the second plurality of posts (11B) and to the corresponding second rail (12B).

## Patentansprüche

1. Landwirtschaftliches System (1) für Reihenkultivierung von Nutzpflanzen (10), umfassend:
- eine erste Vielzahl von Pflanzen (10A) und eine zweite Vielzahl von Pflanzen (10B), die jeweils entlang einer ersten Längsachse (L1) und einer zweiten Längsachse (L2) angeordnet und gegenseitig entlang einer Querrichtung (T) beabstandet sind, um eine erste Reihe (F1) und eine zweite Reihe (F2) zu bilden, wobei sich die Pflanzen einer jeden Reihe in zwei Dimensionen in einer entsprechenden vertikalen Ebene (PS), die durch die jeweilige Längsachse (L1, L2) führt, erstrecken;
- eine Stützstruktur (11), die ausgelegt ist, um die Pflanzen zu stützen, und die für die erste Reihe (F1) und die zweite Reihe (F2) eine erste Vielzahl von Pfosten (11A) und eine zweite Vielzahl von Pfosten (11B) beinhaltet, die jeweils entlang der ersten und der zweiten Längsachse (L1) und (L2) angeordnet und voneinander beabstandet sind;
- eine erste Schiene (12A), die mit der ersten Vielzahl von Pfosten (11A) verbunden ist, und eine zweite Schiene (12B), die mit der zweiten Vielzahl von Pfosten (11B) verbunden ist, wobei die erste Schiene (12A) und die zweite Schiene (12B) längsseitig ausgerichtet und quer voneinander beabstandet sind, um eine Bahn (12) zu definieren, die vom Boden beabstandet ist und parallel zu einem vom Boden definierten Profil verläuft;
- einen Wagen (13), der mit der ersten Schiene (12A) und der zweiten Schiene (12B) gekoppelt ist, um entlang der Bahn (12) bewegbar zu sein, und der einen Bewegungsaktuator (131) beinhaltet, der ausgelegt ist, um den Wagen (13) auf der Bahn (12) zu bewegen,
und
umfassend eine erste Vielzahl von Verbindungsarmen (111A), die mit der ersten Vielzahl von Pfosten (11A) und der entsprechenden ersten Schiene (12A) verbunden sind, und eine zweite Vielzahl von Verbindungsarmen (111B), die mit der zweiten Vielzahl von Pfosten (11B) und der entsprechenden zweiten Schiene (12B) verbunden sind.

2. System (1) nach Anspruch 1, wobei der Wagen (13) eine oder mehrere Betriebsvorrichtungen (14) umfasst, die ausgelegt sind, um Arbeiten auf der Kultivierung durchzuführen und Informationen bezüglich der Kultivierung zu erfassen.

3. System (1) nach Anspruch 2, wobei der Wagen (13) einen Rahmen (130) umfasst, der eine erste Wand (132) beinhaltet, die eine erste Arbeitsoberfläche (S1) definiert, die dem Boden zugewandt ist, und eine zweite Wand (133), die eine zweite Arbeitsoberfläche (S2) definiert, die der der ersten Arbeitsoberfläche (S1) entgegengesetzten Richtung zugewandt ist, und wobei die erste Wand (132) und die zweite Wand (133) relativ zueinander bewegbar sind, und wobei die erste Wand (132) parallel zur ersten Schiene (12A) und zur zweiten Schiene (12B) angeordnet ist.

4. System (1) nach Anspruch 3, umfassend ein Einstellsystem (134), das zwischen der ersten Wand (132) und der zweiten Wand (133) eingesetzt und ausgelegt ist, um die Neigung der zweiten Wand (133) einzustellen, um diese senkrecht zur Richtung der Gewichtskraft zu halten.

5. System (1) nach Anspruch 3 oder 4, wobei die eine oder mehreren Betriebsvorrichtungen (14) eine erste Vorrichtung (141) beinhalten, die mit der ersten Arbeitsoberfläche (S1) verbunden und ausgelegt ist, um Arbeiten in Richtung des Bodens durchzuführen oder Informationen in Bezug auf den Boden zu erfassen, und eine zweite Vorrichtung (142), die mit der zweiten Arbeitsoberfläche (S2) verbunden und ausgelegt ist, um Arbeiten an den Pflanzen durchzuführen oder Informationen in Bezug auf die Pflanzen zu erfassen.

6. System (1) nach einem der Ansprüche 2 bis 5, umfassend eine Wechselstation (17), die ausgelegt ist, um zu erlauben, dass die eine oder mehreren Betriebsvorrichtungen (14) automatisch oder manuell gewechselt werden.

7. System (1) nach einem der vorhergehenden Ansprüche, wobei der Wagen (13) eine Vielzahl von Wälzelementen (135) umfasst, die jeweils mit der Schiene (12) in Kontakt sind, und eine Vielzahl von vorgespannten elastischen Elementen (136), die jeweils mit einem entsprechenden Wälzelement (135) verbunden sind, um diesen gegen die Bahn (12) zu pressen, wobei die Vielzahl von Wälzelementen (135) mindestens eine Gruppe von Querwälzelementen (135A) umfasst, wobei jeder Querwälzelement (135A) derart ausgerichtet ist, dass er sich um eine jeweilige Rotationsachse dreht, die parallel zur durch die entsprechende Reihe (F1, F2) definierten vertikalen Ebene (PS) angeordnet ist.

8. System (1) nach einem der vorhergehenden Ansprüche, wobei der Wagen (13) eine Steuereinheit (138) umfasst, die eines oder mehrere der folgenden Merkmale beinhaltet:
- ein Ortungsmodul, das ausgelegt ist, um eine Position des Wagens (13) auf der Schiene (12) relativ zur Kultivierung (10) zu bestimmen;
- ein Sicherheitsmodul, das ausgelegt ist, um Hindernisse zu erkennen, die angetroffen werden, wenn sich der Wagen (13) entlang der Bahn (12) bewegt;
- ein Kommunikationsmodul, das ausgelegt ist, um die erfassten Daten, die Informationen bezüglich der Pflanzen repräsentieren, zu senden.

9. System (1) nach Anspruch 8, umfassend ein Fernsteuergerät (16), das mit der Steuereinheit (138) des Wagens (13) verbunden und ausgelegt ist, um Antriebssignale (161) an die Steuereinheit (138) des Wagens (13) zu senden, um diese anzuweisen, den Wagen (13) entlang eines vorbestimmten Wegs zu bewegen,
wobei die Steuereinheit (138) des Wagens (13) oder das Fernsteuergerät (16) ausgelegt ist, um:
- die erfassten Daten zu empfangen;
- die erfassten Daten in einem Speicher zu speichern;
- die erfassten Daten zu verarbeiten, um Entscheidungsfindungsmodelle zu generieren;
- Steuerdaten (162) abhängig von den erfassten Daten und den generierten Entscheidungsfindungsmodellen oder den bereits im Speicher enthaltenen Entscheidungsmodellen zu generieren.

10. System (1) nach einem der vorhergehenden Ansprüche, wobei der Bewegungsaktuator (131) ein elektrischer Aktuator ist und der Wagen (13) einen elektrischen Energiespeicher (137) umfasst, der mit dem Bewegungsaktuator (131) verbunden ist, um diesen zu speisen, und wobei das System (1) eine Ladestation (17) umfasst, die mit der Bahn (12) verbunden ist und eine elektrische Schnittstelle (171) umfasst, die ausgelegt ist, um den elektrischen Energiespeicher (137) zu verbinden, um das Laden mit elektrischer Energie zu erlauben.

11. System (1) nach einem der vorhergehenden Ansprüche, wobei ein jeder Arm der ersten und der zweiten Vielzahl von Verbindungsarmen (111A, 111B) mit der jeweiligen ersten und zweiten Vielzahl von Pfosten durch eine bewegbare Befestigungsvorrichtung verbunden ist, die entlang der vertikalen Richtung einstellbar ist.

12. System (1) nach einem der vorhergehenden Ansprüche, umfassend eine dritte und eine vierte Vielzahl von Pflanzen, die entlang einer jeweiligen dritten und vierten Längsachse angeordnet sind, wobei die dritte Vielzahl von Pflanzen quer von der zweiten Vielzahl von Pflanzen (10B) beabstandet ist, um eine dritte Reihe zu bilden, und die vierte Vielzahl von Pflanzen quer von der dritten Vielzahl von Pflanzen beabstandet ist, um eine vierte Reihe zu bilden, wobei die dritte und die vierte Reihe jeweils eine entsprechende dritte und vierte Vielzahl von Pfosten beinhalten, wobei das System eine dritte Schiene umfasst, die mit der dritten Vielzahl von Pfosten verbunden ist, und eine vierte Schiene, die mit der vierten Vielzahl von Pfosten verbunden und von der dritten Schiene beabstandet ist, um eine zusätzliche Bahn zu definieren, auf der der Wagen (13) bewegbar ist, und wobei der Wagen ausgelegt ist, um Vorgänge in einer Zone zwischen der zweiten und der dritten Reihe von der Bahn (12) oder von der zusätzlichen Bahn durchzuführen, sodass sich der Wagen (13) wechselweise entlang der Reihen bewegen kann.

13. Mobile Plattform (13) zum Arbeiten auf einer Reihenkultivierung von Nutzpflanzen (10), umfassend:
- einen Rahmen (130);
- eine oder mehrere Arbeitseinheiten, die jeweils eine Betriebsvorrichtung (14) beinhalten, die ausgelegt ist, um vorbestimmte Vorgänge auf der Kultivierung durchzuführen;
- eine Vielzahl von Wälzelementen (135), die mit dem Rahmen (130) verbunden und zumindest teilweise in Kontakt mit einer Bahn (12) gehalten werden, auf der die Plattform (13) verschiebbar ist,
wobei die Vielzahl von Wälzelementen eine Gruppe von Querwälzelementen umfasst, die jeweils derart ausgerichtet sind, dass sie sich um eine jeweilige Rotationsachse drehen, die parallel zu einer vertikalen Ebene angeordnet ist, die von einer entsprechenden Reihe definiert ist, sowie eine Gruppe von Längswälzelementen, die jeweils derart ausgerichtet sind, dass sie sich um eine jeweilige Querrotationsachse drehen, die parallel zur Querrichtung angeordnet ist,
wobei der Rahmen (130) eine erste Wand (132) beinhaltet, die eine erste Arbeitsoberfläche (S1) definiert, die dem Boden zugewandt ist, und eine zweite Wand (133), die eine zweite Arbeitsoberfläche (S2) definiert, die der der ersten Arbeitsoberfläche (S1) entgegengesetzten Richtung zugewandt ist, und wobei die erste Wand (132) und die zweite Wand (133) relativ zueinander bewegbar sind, und wobei die erste Wand (132) parallel zu Schienen angeordnet ist,
wobei die Betriebsvorrichtungen (14) eine erste Vorrichtung (141) beinhalten, die mit der ersten Arbeitsoberfläche (S1) verbunden und ausgelegt ist, um Arbeiten auf dem Boden durchzuführen oder Informationen in Bezug auf den Boden zu erfassen, und eine zweite Vorrichtung (142), die mit der zweiten Arbeitsoberfläche (S2) verbunden und ausgelegt ist, um Arbeiten an den Pflanzen durchzuführen oder Informationen in Bezug auf die Pflanzen zu erfassen.

14. Verfahren zur Bewirtschaftung einer Reihenkultivierung von Nutzpflanzen (10), umfassend die folgenden Schritte:
- Vorbereiten einer ersten Vielzahl von Pflanzen (10A) und einer zweiten Vielzahl von Pflanzen (10B), die jeweils entlang einer ersten und einer zweiten Längsachse (L1, L2) angeordnet und gegenseitig entlang einer Querrichtung (T) beabstandet sind, um eine erste Reihe (F1) und eine zweite Reihe (F2) zu bilden, wobei sich die Pflanzen einer jeden Reihe in zwei Dimensionen in einer entsprechenden vertikalen Ebene (PS), die durch die jeweilige Längsachse (L1, L2) führt, erstrecken;
- Stützen der ersten und der zweiten Vielzahl von Pflanzen (10A, 10B) mittels einer Stützstruktur (11), die eine erste und eine zweite Vielzahl von Pfosten (11A, 11B) umfasst, wobei die Pfosten der ersten und zweiten Vielzahl von Pfosten (11A, 11B) jeweils entlang der entsprechenden ersten und zweiten Reihe (F1, F2) angeordnet und voneinander entlang der entsprechenden ersten und zweiten Längsachse (L1, L2) beabstandet sind;
- Verbinden einer ersten Schiene (12A) mit der ersten Vielzahl von Pfosten (11A) und Verbinden einer zweiten Schiene (12B) mit der zweiten Vielzahl von Pfosten (11B), wobei die erste und die zweite Schiene (12A, 12B) längsseitig ausgerichtet und quer voneinander beabstandet sind, um eine Bahn (12) zu definieren;
- Bewegen eines Wagens (13) entlang der Bahn (12) mittels eines Bewegungsaktuators (131),
wobei beim Schritt zum Verbinden eine erste Vielzahl von Verbindungsarmen (111A) die erste Vielzahl von Pfosten (11A) mit der entsprechenden ersten Schiene (12A) verbindet, und eine zweite Vielzahl von Verbindungsarmen (111B) mit der zweiten Vielzahl von Pfosten (11B) und mit der entsprechenden zweiten Schiene (12B) verbunden ist.

## Revendications

1. Système agricole (1) pour une installation de culture en rangées (10), comprenant :
- une première pluralité de plants (10A) et une deuxième pluralité de plants (10B), disposées le long d'un premier axe longitudinal (L1) et d'un second axe longitudinal (L2), respectivement, et mutuellement espacées le long d'une direction transversale (T) pour former une première rangée (F1) et une deuxième rangée (F2), les plants de chaque rangée s'étendant en deux dimensions dans un plan vertical (PS) correspondant passant à travers l'axe longitudinal (L1, L2) respectif ;
- une structure de support (11), configurée pour supporter les plants et incluant, pour la première rangée (F1) et la deuxième rangée (F2), une première pluralité de poteaux (11A) et une deuxième pluralité de poteaux (11B) disposés et espacés les uns des autres le long des premier et second axes longitudinaux (L1) et (L2), respectivement,
- un premier rail (12A), relié à la première pluralité de poteaux (11A), et un deuxième rail (12B), relié à la deuxième pluralité de poteaux (11B), le premier rail (12A) et le deuxième rail (12B) étant orientés longitudinalement et espacés transversalement l'un de l'autre pour définir une voie (12), espacée du sol et parallèle à un profilé défini par le sol ;
- un chariot (13), couplé au premier rail (12A) et au deuxième rail (12B) pour être mobile le long de la voie (12) et incluant un actionneur de mouvement (131), configuré pour déplacer le chariot (13) sur la voie (12), et
comprenant une première pluralité de bras de liaison (111A), reliés à la première pluralité de poteaux (11A) et au premier rail (12A) correspondant, et une deuxième pluralité de bras de liaison (111B), reliés à la deuxième pluralité de poteaux (11B) et au deuxième rail (12B) correspondant.

2. Système (1) selon la revendication 1, dans lequel le chariot (13) comprend un ou plusieurs dispositifs opérationnels (14) configurés pour effectuer un travail sur l'installation et pour capturer des informations relatives à l'installation.

3. Système (1) selon la revendication 2, dans lequel le chariot (13) comprend un bâti (130) incluant une première paroi (132), définissant une première surface de travail (S1) faisant face au sol, et une seconde paroi (133), définissant une deuxième surface de travail (S2) faisant face à la direction opposée à la première surface de travail (S1) et dans lequel la première paroi (132) et la seconde paroi (133) sont mobiles l'une par rapport à l'autre, et dans lequel la première paroi (132) est parallèle au premier rail (12A) et au deuxième rail (12B).

4. Système (1) selon la revendication 3, comprenant un système de réglage (134), interposé entre la première paroi (132) et la seconde paroi (133) et configuré pour régler l'inclinaison de la seconde paroi (133) pour la maintenir perpendiculaire à la direction de la force de poids.

5. Système (1) selon la revendication 3 ou 4, dans lequel l'un ou plusieurs dispositifs opérationnels (14) incluent un premier dispositif (141), relié à la première surface de travail (S1) et configuré pour effectuer un travail dans la direction du sol ou capturer des informations relatives au sol, et un second dispositif (142), relié à la deuxième surface de travail (S2) et configuré pour effectuer un travail sur les plants ou capturer des informations relatives aux plants.

6. Système (1) selon l'une quelconque des revendications 2 à 5, comprenant une station de changement (17) configurée pour permettre de changer lesdits un ou plusieurs dispositifs opérationnels (14) de manière automatique ou manuelle.

7. Système (1) selon l'une quelconque des revendications précédentes, dans lequel le chariot (13) comprend une pluralité d'éléments roulants (135), chacun en contact avec la voie (12) et une pluralité d'éléments élastiques préchargés (136), chacun relié à un élément roulant (135) correspondant pour le presser contre la voie (12), dans lequel la pluralité d'éléments roulants (135) comprend au moins un groupe d'éléments roulants transversaux (135A), chaque élément roulant transversal (135A) étant orienté de manière à tourner autour d'un axe de rotation respectif parallèle au plan vertical (PS) défini par la rangée (F1, F2) correspondante.

8. Système (1) selon l'une quelconque des revendications précédentes, dans lequel le chariot (13) comprend une unité de commande (138) incluant une ou plusieurs des caractéristiques suivantes :
- un module de localisation, configuré pour déterminer une position du chariot (13) sur la voie (12) par rapport à l'installation (10) ;
- un module de sécurité, configuré pour détecter des obstacles rencontrés lorsque le chariot (13) se déplace le long de la voie (12) ;
- un module de communication, configuré pour envoyer les données capturées, représentant des informations concernant les plants.

9. Système (1) selon la revendication 8, comprenant un terminal de commande à distance (16), relié à l'unité de commande (138) du chariot (13) et configuré pour envoyer des signaux d'entraînement (161) à l'unité de commande (138) du chariot (13) pour lui ordonner de déplacer le chariot (13) le long d'un parcours prédéterminé,
dans lequel l'unité de commande (138) du chariot (13) ou le terminal de commande à distance (16) sont configurés pour :
- recevoir les données capturées ;
- enregistrer les données capturées dans une mémoire ;
- traiter les données capturées pour générer des modèles de prise de décision ;
- générer des données de commande (162) en fonction des données capturées et des modèles de prise de décision générés ou des modèles de prise de décision déjà présents dans la mémoire.

10. Système (1) selon l'une quelconque des revendications précédentes, dans lequel l'actionneur de déplacement (131) est un actionneur électrique et le chariot (13) comprend un accumulateur d'énergie électrique (137), relié à l'actionneur de déplacement (131) pour l'alimenter, et dans lequel le système (1) comprend une station de charge (17), reliée à la voie (12) et comprenant une interface électrique (171) configurée pour relier l'accumulateur d'énergie électrique (137) pour permettre la charge avec de l'énergie électrique.

11. Système (1) selon l'une quelconque des revendications précédentes, dans lequel chaque bras de la première et de la seconde pluralité de bras de liaison (111A, 111B) est relié à la première et à la deuxième pluralité de poteaux respectifs par un élément de fixation mobile, qui est réglable le long de la direction verticale.

12. Système (1) selon l'une quelconque des revendications précédentes, comprenant une troisième et une quatrième pluralité de plants, disposées le long d'un troisième et d'un quatrième axe longitudinal respectifs, la troisième pluralité de plants étant espacée transversalement de la deuxième pluralité de plants (10B) pour former une troisième rangée et la quatrième pluralité de plants étant espacée transversalement de la troisième pluralité de plants pour former une quatrième rangée, les troisième et quatrième rangées incluant chacune une troisième et une quatrième pluralité de poteaux correspondants, dans lequel le système comprend un troisième rail, relié à la troisième pluralité de poteaux, et un quatrième rail, relié à la quatrième pluralité de poteaux et espacé du troisième rail pour définir une voie supplémentaire sur laquelle le chariot (13) est mobile, et dans lequel le chariot est configuré pour effectuer des opérations dans une zone entre la deuxième et la troisième rangée à partir de la voie (12) ou à partir de la voie supplémentaire, de manière à permettre au chariot (13) de se déplacer le long des rangées de façon alternée.

13. Plate-forme mobile (13) pour travailler sur une installation de culture en rangées (10), comprenant :
- un bâti (130) ;
- une ou plusieurs unités de travail, chacune incluant un dispositif opérationnel (14) configuré pour effectuer des opérations prédéterminées sur l'installation ;
- une pluralité d'éléments roulants (135) reliés au bâti (130) et au moins partiellement maintenus en contact avec une voie (12) sur laquelle la plate-forme (13) est coulissante,
dans laquelle la pluralité d'éléments roulants comprend un groupe d'éléments roulants transversaux, chacun orienté de manière à tourner autour d'un axe de rotation respectif qui est parallèle à un plan vertical, défini par une rangée correspondante, et un groupe d'éléments roulants longitudinaux, chacun orienté de manière à tourner autour d'un axe de rotation transversal respectif qui est parallèle à la direction transversale, dans lequel le bâti (130) inclut une première paroi (132), définissant une première surface de travail (S1) faisant face au sol, et une seconde paroi (133), définissant une seconde surface de travail (S2) faisant face à la direction opposée à la première surface de travail (S1) et dans laquelle la première paroi (132) et la seconde paroi (133) sont mobiles l'une par rapport à l'autre, et dans laquelle la première paroi (132) est parallèle à des rails,
dans laquelle les dispositifs opérationnels (14) incluent un premier dispositif (141), relié à la première surface de travail (S1) et configuré pour effectuer un travail sur le sol ou capturer des informations relatives au sol, et un second dispositif (142), relié à la seconde surface de travail (S2) et configuré pour effectuer un travail sur les plants ou capturer des informations relatives aux plants.

14. Procédé pour cultiver une installation de culture en rangées (10), comprenant les étapes suivantes :
- préparer une première pluralité de plants (10A) et une deuxième pluralité de plants (10B), disposées le long d'un premier et d'un second axe longitudinal (L1, L2), respectivement, et mutuellement espacées le long d'une direction transversale (T) pour former une première rangée (F1) et une deuxième rangée (F2), les plants de chaque rangée s'étendant en deux dimensions dans un plan vertical (PS) correspondant passant à travers l'axe longitudinal (L1, L2) respectif ;
- supporter la première et la deuxième pluralité de plants (10A, 10B) au moyen d'une structure de support (11) incluant une première et une deuxième pluralité de poteaux (11A, 11B), respectivement, les poteaux de la première et de la deuxième pluralité de poteaux (11A, 11B) étant disposés le long des première et deuxième rangées (F1, F2) correspondantes et étant espacés les uns des autres le long des premier et second axes longitudinaux (L1, L2) correspondants ;
- relier un premier rail (12A) à la première pluralité de poteaux (11A), et relier un deuxième rail (12B) à la deuxième pluralité de poteaux (11B), les premier et deuxième rails (12A, 12B) étant orientés longitudinalement et espacés transversalement l'un de l'autre pour définir une voie (12) ;
- déplacer un chariot (13) le long de la voie (12) au moyen d'un actionneur de déplacement (131) ;
dans lequel dans l'étape consistant à relier, une première pluralité de bras de liaison (111A) relie la première pluralité de poteaux (11A) au premier rail (12A) correspondant, et une deuxième pluralité de bras de liaison (111B), reliée à la deuxième pluralité de poteaux (11B) et au deuxième rail (12B) correspondant.
